# EUROPÄISCHE PATENTSCHRIFT

(11) **EP 3 717 323 B1**
(45) Veröffentlichungstag und Bekanntmachung des Hinweises auf die Patenterteilung: **11.01.2023**
(21) Anmeldenummer: 18815573.3
(22) Anmeldetag: 29.11.2018
(51) Int. Cl.: B60T 17/22, F16D 66/02

(54) **SCHEIBENBREMSE MIT EINER ZUSTANDSÜBERWACHUNGSANORDNUNG UND VERFAHREN ZUM ZUSTANDSÜBERWACHEN EINER SOLCHEN SCHEIBENBREMSE**
DISC BRAKE HAVING A CONDITION MONITORING ARRANGEMENT AND METHOD FOR MONITORING THE CONDITION OF SUCH A DISC BRAKE
FREIN À DISQUE AVEC AGENCEMENT DE SURVEILLANCE DE L'ÉTAT ET PROCÉDÉ DE SURVEILLANCE DE L'ÉTAT D'UN TEL FREIN À DISQUE

(30) Priorität: 01.12.2017 DE 102017128595
(43) Veröffentlichungstag der Anmeldung: 07.10.2020
(73) Patentinhaber: KNORR-BREMSE Systeme für Nutzfahrzeuge GmbH, 80809 München (DE)
(72) Erfinder: BLESSING, Michael, 80687 München (DE); FUCHS, Alexander, 70736 Fellbach (DE); FRICKE, Jens, 94474 Vilshofen (DE)
(86) Internationale Anmeldenummer: PCT/EP2018/083031
(87) Internationale Veröffentlichungsnummer: WO 2019/106099

(56) Entgegenhaltungen:
- EP-A1- 1 892 435
- EP-A1- 3 032 130
- WO-A1-2005/090821
- DE-A1-102013 112 813
- DE-B3-102012 108 672

## Beschreibung

Die Erfindung betrifft eine Scheibenbremse nach dem Oberbegriff des Anspruchs 1. Die Erfindung bezieht sich auf ein Verfahren zum Zustandsüberwachen einer solchen Scheibenbremse.

Im Personenkraftwagen- und im Nutzfahrzeugbereich gehören heutzutage Scheibenbremsen zum Standard. Bei der typischen Bauform einer Scheibenbremse besteht diese aus einem Bremssattel samt innerer Mechanik, aus in der Regel zwei Bremsbelägen und der Bremsscheibe.

Eine Bremsanforderung erfolgt durch einen Nutzer/Fahrer oder ein Assistenzsystem und wird beispielsweise in ein Drucksignal gewandelt, welches an einem Bremszylinder anliegt. Dann werden auf eine innere Mechanik über den pneumatisch betätigten Zylinder die Zylinderkräfte eingeleitet, durch einen Exzentermechanismus verstärkt und als Zuspannkraft über Gewindestempel auf Bremsbeläge und Bremsscheibe übertragen. Die innere Mechanik wird auch als Zuspannvorrichtung bezeichnet und weist z.B. einen Bremsdrehhebel auf, welcher mit einer Brücke, in der die Gewindestempel eingeschraubt sind, in Zusammenwirkung steht. Hierdurch werden dann die Bremsbeläge gegen die Bremsscheibe gedrückt und bewirken eine Bremsung eines Fahrzeugs, dem die Scheibenbremse zugeordnet ist. Die Gewindestempel werden auch als Gewindespindeln bezeichnet.

Die Zuspannkräfte wirken über beide Bremsbeläge auf die Bremsscheibe. Da die Beläge konstruktiv als Verschleißteile ausgelegt werden, sind diese generell weicher als die Bremsscheibe, d.h. die Beläge erfahren über Ihre Gebrauchsdauer eine Änderung der Belagstärke, sie verschleißen. Auch die Bremsscheibe kann verschleißten. Aus diesem Verschleiß der Reibpartner Bremsbeläge und Bremsscheibe ergibt sich die Notwendigkeit, dass eine Verschleißnachstellvorrichtung die Änderung durch den Verschleiß ausgleicht und somit ein konstantes Luftspiel einstellt. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Eine Nachstellvorrichtung gleicht über die Gewindestempel den Verschleiß der Reibpartner Bremsbeläge und Bremsscheibe aus.

Ein Beispiel einer Verschleißnachstellvorrichtung einer Scheibenbremse, eine entsprechende Scheibenbremse und ein Verfahren zum Betreiben einer Verschleißnachstellvorrichtung sind in dem Dokument DE 10 2012 108 672 B3 beschrieben.

DE 10 2013 112 813 A1 betrifft eine Sensoreinrichtung für eine Scheibenbremse. Die Sensoreinrichtung weist ein mit mindestens einem Geber koppelbares Sensorgetriebe auf, wobei das Sensorgetriebe in einem Gehäuse als ein Planetengetriebe angeordnet ist und einen Eingang für eine von der Sensoreinrichtung zu erfassende erste Größe, die einem Verschleiß der Scheibenbremse zugeordnet ist, und einen Eingang für eine von der Sensoreinrichtung zu erfassende zweite Größe, die einem Betätigungshub der Scheibenbremse zugeordnet ist, aufweist.

DE 10 2013 112 527 A1 beschreibt eine Einrichtung zur Überwachung von Lüftspiel, Einzelverschleiß und Gesamtverschleiß einer Bremse. Ein Sattelpositionssensor ist hier mit mindestens einer Sattelführung gekoppelt. Ein Hebelhub sowie das Lüftspiel werden durch einen Wegsensor mit Steuereinheit überwacht.

Mit Hinblick auf das hochautomatisierte - bzw. autonome Fahren gibt es einen ständigen Bedarf zur Automatisierung von Funktionen und Realisierung von Sicherheitsfunktionen, wobei gleichzeitig Kosten bei Montage und Wartung nicht vergrößert, sondern reduziert werden sollen.

Die Aufgabe der vorliegenden Erfindung besteht darin, eine verbesserte Scheibenbremse mit einer verbesserten Überwachungseinrichtung bereitzustellen.

Eine weitere Aufgabe ist es, ein Verfahren zum Zustandsüberwachen einer Scheibenbremse anzugeben.

Die Aufgabe wird durch eine Scheibenbremse mit den Merkmalen des Anspruchs 1 gelöst. Außerdem wird die weitere Aufgabe durch ein Verfahren mit den Merkmalen des Anspruchs 21 gelöst.

Es wird eine Scheibenbremse geschaffen, welche mit Hinblick auf das hochautomatisierte Fahren (SAE Level 4) - bzw. autonome Fahren (SAE Level 5) eine Anordnung zur Zustandsüberwachung der Scheibenbremse als ein wichtiges Kriterium zur Realisierung von verschiedenen (Sicherheits-)Funktionen aufweist. Mögliche Fehlerzustände werden von einer Regelung durch Software eines Steuergerätes und einer Schalteinheit - ohne Rückfallebene eines menschlichen Fahrers - erkannt und die notwendigen Gegenmaßnahmen zur Risikominimierung und Beibehaltung der Sicherheit durchgeführt. Dazu ist es von Vorteil, dass bestimmte Zustandsgrößen der Bremseinrichtung über die Einsatzdauer der Scheibenbremse hinsichtlich Fehlverhaltens überwacht werden können.

Ein Gedanke der Erfindung besteht darin, vorhandene, bereits bekannte Ansätze zur Zustandsüberwachung in der Form weiterzuentwickeln, um ein verbessertes Bremssystem bzw. eine verbesserte Zustandsüberwachung zu erhalten.

Eine erfindungsgemäße Scheibenbremse umfasst die Merkmale des Anspruchs 1.

Ein besonderer Vorteil besteht darin, dass eine gezielte Steuerung der Wartung bzw. der Werkstattaufenthalte (predictive maintenance) sowie eine Erhöhung der Sicherheit der Bremseinrichtung durch vollständige Überwachung der Zustandsgrößen mit einem kombinierten Sensorsystem ermöglicht werden kann.

Besonders vorteilhaft ist hierbei, dass das Sensorsystem modular aufgebaut ist, während die Schnittstellen im Sensorsystem und von einer Schalteinheit zu einem externen Steuergerät, unabhängig von dem verwendeten Sensorumfang, beibehalten werden können. So ist ein einfacher modularer Upgrade der Überwachungsmöglichkeiten machbar, da die bestehende Verbindung zwischen der Schalteinheit und dem externen Steuergerät unverändert bleibt. Die notwendige Auswertung erfolgt mithilfe eines Mikrocontrollers in der Schalteinheit oder durch die externe Steuereinheit.

Somit können auch Bremseinrichtungen in Fahrzeugen, welche sich bereits im Feld befinden, auf eine einfache Art und Weise nachgerüstet werden. Eine softwareseitige Freischaltung der Funktionen im elektronischen Bremssystem kann dabei durch ein Software-Update während eines Werkstattaufenthalts kabelgebunden oder kabellos erfolgen. Auch eine Freischaltung ohne Werkstattbesuch über einen kabellosen oder kabelgebundenen Internetzugang ist vorstellbar

Durch den modularen Aufbau sowie die Beibehaltung der Schnittstellen kann eine Erhöhung der Sicherheit für bestimmte Applikationen kostengünstig sowie ohne großen Aufwand erfolgen.

Es ergibt sich somit der Vorteil einer verbesserten Regelung der Bremse mit Vorteilen für das Bremsverhalten und zur Zustandsüberwachung der Bremse. Dabei werden die Verschiebung des Schwimmsattels, das Lüftspiel, der Summenverschleiß sowie der Einzelverschleiß des jeweiligen Belags und der Bremsscheibe überwacht, um Betriebsfehler aufzudecken und kritische Zustände zu erkennen. Eine umfassende Zustandsüberwachung stellt vor allem mit Hinblick auf Anwendungen im hochautomatisierten (SAE Level 4) oder autonomen Fahren (SAE Level 5) einen wichtigen Vorteil dar, da im Fehlerfall die Rückfallebene Fahrer entfällt.

Weitere vorteilhafte Ausgestaltungen sind in den Unteransprüchen angegeben.

In einer Ausführung umfasst die Anordnung zur Zustandsüberwachung der Scheibenbremse einen Sattelsensor zur Erfassung einer Position des Bremssattes in Richtung einer Bremsscheibenachse der Bremsscheibe, einen Summenverschleißsensor zur Erfassung eines Summenverschleißes von Bremsbelägen und Bremsscheibe und zur Erfassung eines Hubs der Zuspannvorrichtung, insbesondere des Bremsdrehhebels, einen Drucksensor zur Erfassung eines Drucks eines Innenraums eines Zuspannabschnitts des Bremssattels, ein Kupplungsglied zur Kopplung des Summenverschleißsensors mit der Nachstelleinrichtung und mit der Zuspannvorrichtung, und eine Schalteinheit, welche mit den Sensoren kabelgebunden oder kabellos in Verbindung steht.

Die Sensoren sind hierbei kabelgebunden oder kabellos mit der elektronischen Schalteinheit verbunden. Diese tauscht Informationen kabelgebunden oder kabellos mit einem externen Steuergerät aus. Die Schalteinheit sammelt auch über das Sensorsystem in bzw. an der Bremse spezifische Informationen und leitet diese an das externe Steuergerät zur Überführung in spezifische Lastkollektive weiter.

Damit wird es vorteilhaft ermöglicht, folgende Zustandsinformationen der Bremse zu erfassen.
▪ Messen der Belagdicke bzw. des Einzelverschleißes der Reibpartner Bremsbelag und Bremsscheibe
▪ Messen des Summenverschleißes der Reibpartner Bremsbelag und Bremsscheibe
▪ Messung der Sattelposition, d.h. der Position des Bremssattels in Richtung der Bremsscheibenachse, um Rückschlüsse auf Zustand der Sattelführung(en) erlangen
▪ Messung des Sattelinnenraumdruckes, d.h. des Drucks des Innenraums des Zuspannabschnitts des Bremssattels, zur Zustandsüberwachung der Dichtungen der Bodenplatte, der Dichtungen der Druckstücke, der Dichtungen von Deckel und Sensorgehäuse, u.dgl.
▪ Messung des Hebelhubs bzw. Hub der Zuspanneinheit (Bremsdrehhebel bzw. Brücke)
▪ Messung der Temperatur der Bremsanlage über ein Temperaturäquivalent gemäß der thermischen Zustandsgleichung (Druck) zur Zustandsüberwachung (Heißläufer)
▪ Überwachung der Feststellbremse bzw. Plausbilisierung
▪ Überwachung des Zustandes der inneren Mechanik
▪ Überwachung der Hysterese
▪ Speichern von spezifischen Lastkollektiven dezentral in der Bremseinheit bzw. in dem Steuergerät oder/und zusätzlichen Speichermedien

Eine weitere Ausführung sieht vor, dass der Summenverschleißsensor mit einem Spindeltrieb und einem Planetengetriebe koaxial zu dem Gewindestempel in der Mitnehmereinrichtung angeordnet sind. Dies ergibt einen vorteilhaft kompakten Aufbau.

Ein kompakter Aufbau kann zudem dadurch vorteilhaft verbessert werden, wenn der Summenverschleißsensor und der Drucksensor zusammen mit einem Spindeltrieb und einem Planetengetriebe eine Sensoreinheit bilden, wobei die Sensoreinheit und das Kupplungsglied in der Mitnehmereinrichtung angeordnet sind.

Es ist weiterhin vorteilhaft, wenn der Drucksensor auf einer Platine des Summenverschleißsensors integriert ist. Hierbei ist es auch möglich, dass der Drucksensor als steckbares Bauteil bzw. steckbare Platine ausgestaltet ist, wodurch ein vorteilhaftes Nachrüsten ermöglicht wird.

In weiterer Ausgestaltung ist das Kupplungsglied koaxial zu dem Gewindestempel und hülsenartig über dem Gewindestempel der Mitnehmereinrichtung angeordnet, wobei das Kupplungsglied über einen Antriebsabschnitt an einem Ende mit dem Gewindestempel drehfest gekoppelt ist, und wobei das andere Ende des Kupplungsgliedes über einen Abtriebsabschnitt mit dem Spindeltrieb in Verbindung steht. Dies ergibt nicht nur einen kompakten Aufbau, sondern auch eine vorteilhaft einfache Montage.

In einer noch weiteren Ausführung, wobei die Synchroneinrichtung der Scheibenbremse Koppelräder aufweist, die an der Brücke ortsfest und drehbar angeordnet sind und von denen jeweils eins mit dem jeweiligen Gewindestempel drehfest gekoppelt ist, ist vorgesehen, dass der Antriebsabschnitt des Kupplungsgliedes mit dem zu dem Gewindestempel der Mitnehmereinrichtung zugehörigen Koppelrad der Synchroneinrichtung drehfest gekoppelt ist. Der Vorteil besteht hier darin, dass das Kupplungsglied durch die Kopplung mit dem Koppelrad nicht nur die Drehbewegung des Gewindestempels bei einem Nachstellvorgang erfährt, sondern auch bei jedem Bremsvorgang mit dem Hub der Brücke und somit mit dem Hub des Bremsdrehhebels beaufschlagt wird.

Es ist in einer noch weiteren Ausführung vorgesehen, dass das Kupplungsglied zwei sich gegenüberstehend angeordnete Verbindungsabschnitte aufweist, welche den Antriebsabschnitt und den Abtriebsabschnitt verbinden und wobei jeder Verbindungsabschnitt aus zwei dreieckförmigen Abschnitten, deren Spitzen verbunden sind, besteht, und wobei die Grundseite des einen dreieckförmigen Abschnitts mit dem Antriebsabschnitt verbunden ist und die Grundseite des anderen dreieckförmigen Abschnitts mit dem Abtriebsabschnitt verbunden ist. Das Kupplungsglied ist durch diesen besonderen, elastischen Aufbau vorteilhaft in der Lage, die relevanten Bewegungen (Rotation, Translation) nahezu spielfrei zu übertragen, jedoch radiale Bewegungen durch Störgrößen wie Vibrationen etc. auszugleichen.

In weiterer Ausführung ist das Kupplungsglied derart mit dem Planetengetriebe gekoppelt, dass das Kupplungsglied eine Drehbewegung der Gewindespindel auf einen ersten Eingang des Planetengetriebes überträgt, und dass das Kupplungsglied derart mit dem Spindeltrieb gekoppelt ist, dass das Kupplungsglied eine lineare Hubbewegung der Brücke als eine lineare Hubbewegung koaxial zu dem Gewindestempel in Richtung der Bremsscheibenachse auf den Spindeltrieb überträgt.

Weiterhin ist es vorgesehen, dass der Spindeltrieb mit dem Planetengetriebe derart gekoppelt ist, dass der Spindeltrieb die Drehbewegung des Kupplungsgliedes auf einen ersten Eingang des Planetengetriebes überträgt, und dass der Spindeltrieb die lineare Hubbewegung des Kupplungsgliedes in eine Drehbewegung umwandelt und diese Drehbewegung auf einen zweiten Eingang des Planetengetriebes überträgt.

In einer noch weiteren Ausführung sind das Kupplungsglied, der Spindeltrieb, das Planetengetriebe und der Summenverschleißsensor im Verlauf einer Mitnehmerachse der Mitnehmereinrichtung ausgehend von der Brücke hintereinander angeordnet. Damit wird ein vorteilhaft kompakter Aufbau erzielt.

Es ist weiterhin von Vorteil - nicht nur für einen kompakten Aufbau, sondern auch für eine einfache Montage - wenn der Spindeltrieb, das Planetengetriebe, der Summenverschleißsensor, und der Drucksensor als Sensoreinheit innerhalb eines Sensorgehäuses auf bzw. in einem Träger angeordnet sind, wobei sich das Sensorgehäuse durch eine der Mitnehmereinrichtung zugeordnete Durchgangsöffnung einer Außenwand des Zuspannabschnitts des Bremssattels erstreckt und mit einem kappenartige Abschnitt von der Außenwand nach außen hervorsteht.

Wenn der kappenartige Abschnitt des Sensorgehäuses eine seitliche Erweiterung aufweist, die sowohl eine steckbare Verbindung zu einem Anschlussabschnitt des Sattelsensors als auch einen gemeinsamen Anschluss der Sensoren aufweist, ergibt sich der Vorteil eines integrierten Anschlusses des Sattelsensors.

Es ist dabei zusätzlich vorteilhaft, wenn die seitliche Erweiterung des kappenartigen Abschnitts des Sensorgehäuses eine Halterung für den Sattelsensor bildet.

In einer anderen Ausführung umfasst der Sattelsensor ein Gehäuse mit dem Anschlussabschnitt, eine Stange und eine Feder, wobei ein freies Ende der Stange einen Kontaktabschnitt aufweist, wobei sich das andere Ende der Stange in das Gehäuse erstreckt, in diesem gegen eine Federkraft der Feder verschiebbar geführt und mit einem Linearsensor gekoppelt ist. Dies ist ein vorteilhaft einfacher und kompakter Aufbau.

In einer weiteren Ausführung ist der Sattelsensor außerhalb des Bremssattels an dem Zuspannabschnitt des Bremssattels so angebracht, dass der Kontaktabschnitt des freien Endes der Stange des Sattelsensors mit einem ortsfesten Bauteil/Teil der Scheibenbremse oder einem ortsfesten Teil eines Fahrzeugs, dem die Scheibenbremse zugeordnet ist, oder/und mit einem Abschnitt des ortsfesten Bauteils/Teils in Kontakt steht und durch die Federkraft der Feder gegen das ortsfeste Bauteil gedrückt wird. Auf diese Art und Weise wird es vorteilhaft möglich, dass der Sattelsensor nicht nur für Wartungs- und Austauscharbeiten leicht zugänglich und auswechselbar ist, sondern auch als Nachrüstteil nachträglich angebracht werden kann.

Eine noch weitere Ausführung sieht vor, das ortsfeste Bauteil der Scheibenbremse der Bremsträger ist, wodurch vorteilhaft kein zusätzliches Bauteil erforderlich wird.

Es ist vorteilhaft, wenn das ortsfeste Bauteil der Scheibenbremse ein Trägerbeam des Bremsträgers ist, da es hierbei einen Abschnitt gibt, der bereits bei der Herstellung des Bremsträgers für dessen Befestigung bearbeitet ist und somit ohne zusätzliche Bearbeitung als Referenz für den Sattelsensor dienen kann.

In einer alternativen Ausführung kann der Sattelsensor außerhalb des Bremssattels mit seinem Gehäuse an einem ortsfestem Achsteil eines Fahrzeugs, dem die Scheibenbremse zugeordnet ist, bzw. an dem Bremsträger so angebracht sein, dass der Kontaktabschnitt des freien Endes der Stange des Sattelsensors mit dem Bremssattel oder/und mit einem Abschnitt des Bremssattels in Kontakt steht und durch die Federkraft der Feder gegen den Bremssattel oder/und den Abschnitt des Bremssattels gedrückt wird. Dies kann bei besonderen Einbaubedingungen von Vorteil sein.

In einer weiteren Ausführung ist es vorgesehen, dass die Anordnung zur Zustandsüberwachung der Scheibenbremse mindestens einen Temperatursensor innerhalb oder/und außerhalb des Bremssattels aufweist. Damit ergibt sich der Vorteil einer Erweiterung der Überwachung der Zustände der Scheibenbremse.

Es ist besonders vorteilhaft, wenn die Anordnung zur Zustandsüberwachung der Scheibenbremse mindestens eine für die Sensoren gemeinsame Schnittstelle aufweist, da so zusätzliche Verkabelung nicht erforderlich wird.

In einer weiteren Ausführung des Verfahrens wird mittels eines Drucksensors eine Überwachung von Dichtungen eines Innenraums eines Zuspannabschnitts eines Bremssattels der Scheibenbremse, eine Überwachung von Heißläufern durch ein temperaturäquivalentes Signal des Drucksensors und eine Lüftspielplausibilisierung durchgeführt. Hierbei ergibt sich der Vorteil, dass der Drucksensor für mehrere Erfassungsaufgaben verwendet werden kann. Damit ergibt sich der Vorteil einer weiteren wichtigen Zustandsüberwachung der Dichtungen. Durch beschädigte oder fehlerhafte Dichtungen kommt es zu einem Feuchtigkeitseintritt in den Bremseninnenraum und dadurch eventuell zum Ausfall elektronischer Teile oder zur Korrosion innerer mechanischer Teile. Dies kann somit vorteilhaft früh genug erkannt und somit verhindert werden.

In einer noch weiteren Ausführung werden mittels eines Sattelsensors eine Erfassung und Überwachung der Position des Bremssattels, eines Einzelbelagverschleißes eines äußeren bzw. rückenseitigen Bremsbelags und eine Überwachung eines Zustands von Führungen und/oder Lagerungen des Bremssattels durchgeführt. Dies ergibt eine Reduzierung von zusätzlichen Sensoren, da diese Funktionen von dem Sattelsensor übernommen werden können.

Wenn mittels mindestens eines Temperatursensors eine Erfassung und Überwachung von Temperaturen der Scheibenbremse durchgeführt werden, kann eine Zustandsüberwachung vorteilhaft verbessert werden, da sich aus den Temperaturverläufen und Temperaturen im Vergleich mit vorher festgelegten Grenzwerten eine Voraussage für bestimmte Wartungen erstellen lässt. Dies kann Kosten sparen, wobei auch eine Einsatzzeit verlängert werden kann.

Weiterhin ist es vorteilhaft, wenn eine Datenübertragung der Signale der Sensoren über eine gemeinsame analoge Datenleitung oder/und über eine digitale Datenverbindung erfolgt, da auf diese Weise zusätzliche Installationsarbeiten aufgrund von Verkabelungen, z.B. bei Nachrüstungen, entfallen können.

In einer Ausführung erfolgt eine analoge Datenübertragung der Signale der Sensoren mittels Multiplexer durch ein sequentielles Einlesen der Überwachungsdaten der einzelnen Sensoren. Damit ist eine vorteilhafte Kommunikation mit einem entsprechenden Steuergerät der Bremse möglich, wenn dieses z.B. nur oder noch für analoge Datenübertragung ausgebildet ist.

In einer anderen Ausführung kann eine digitale Datenübertragung der Signale der Sensoren unter Verwenden eines digitalen Bus-Protokolls erfolgt, wobei ein Master in einem externen Steuergerät angeordnet ist. Dadurch ist eine vorteilhafte Kommunikation mit einem Bus-System eines Steuergerätes möglich.

Es ist zudem vorteilhaft möglich, dass ebenfalls der Ansprechdruck, der Anlegedruck, das Lösen der Bremse und die Hysterese überwacht werden können. Als weiterer Vorteil kann durch die Zustandsüberwachungseinrichtung ein Plausibilitätscheck der Feststellbremse erfolgen

Es ergeben sich folgende Vorteile:
1. Modulare Erweiterbarkeit unter Beibehaltung der Kabelschnittstelle der Bremse zum Bremssystem (Kabel wird OEM-seitig beschafft). Z.B. können dadurch Flottenbetreiber gezielt einzelne Fahrzeuge mit entsprechender Sensorik erweitern.
2. Komplettüberwachung der Scheibenbremse und dadurch Überwachung aller relevanten Zustandsgrößen
3. Erweiterung um Dichtheits-Überwachung
4. Beschriebene Lösungen erfassen das Lüftspiel der Scheibenbremse und verhindern dadurch einen sog. Heißläufer der Bremse bei signifikant zu geringem Lüftspiel. Ein Heißläufer ist sicherheitsrelevant, da dadurch der Reifen beschädigt bzw. zerstört werden kann. Eine reine Wegmessung des Lüftspiels liefert hier jedoch einen nicht 100% zuverlässigen Indikator für einen Heißläufer, da Bremsbeläge ein kontinuierliches Schleifen der Beläge durch Heißverschleiß kompensieren und dadurch einen Heißläufer verhindern können. Ein irrtümliches Warnsignal und ein dadurch resultierender Werkstattaufenthalt können vermieden werden, indem die Temperatur der Bremsanlage oder ein weiteres, temperaturäquivalentes Signal ausgewertet wird.
   Dies wird ebenfalls gewährleistet durch die Auswertung des Innendrucks der Bremsen. Steigt das Druckniveau in einer Bremse im Vergleich zu den Druckniveaus der anderen Bremsen unverhältnismäßig stark an, kann auf eine Hitzeentwicklung rückgeschlossen werden, da Temperatur und Druck physikalisch verbunden sind, was durch die thermische Zustandsgleichung beschrieben wird.
5. Es können zudem zusätzliche, freie Schnittstellen vorgesehen sein, um mögliche Sensoren nachzurüsten.
6. Insbesondere ergeben sich durch den modularen Aufbau mehrere Kombinationen ausgehend von einer Ausgangsvariante, die als Minimalvariante bezeichnet werden kann:
   Summenverschleißsensor und Drucksensor Summenverschleißsensor und Hub-Überwachung mittels Spindeltrieb Summenverschleißsensor und Sattelpositionssensor Summenverschleißsensor, Hub-Überwachung mittels Spindeltrieb und Drucksensor Summenverschleißsensor, Drucksensor und Sattelpositionssensor Summenverschleißsensor, Hub-Überwachung mittels Spindeltrieb und Sattelpositionssensor Summenverschleißsensor, Hub-Überwachung mittels Spindeltrieb, Sattelpositionssensor und Drucksensor
7. Durch den modularen Aufbau kann ebenfalls auf verschiedene Gehäusevarianten verzichtet werden und demnach entstehender Zusatzaufwand für zusätzliche Varianten kann vorbeugend verhindert werden

Die Erfindung wird nun anhand beispielhafter Ausführungen mit Bezug auf die beigefügten Zeichnungen näher erläutert. Hierbei zeigen:
- Fig. 1: eine schematische Schnittansicht einer Scheibenbremse nach dem Stand der Technik;
- Fig. 2 bis 4: perspektivische schematische Teilschnittansichten eines Aus-führungsbeispiels einer erfindungsgemäßen Scheibenbremse;
- Fig. 5: eine schematische Seitenansicht eines Sattelsensors;
- Fig. 6: eine schematische Seitenansicht eines Kupplungsgliedes und eine Teilschnittansicht einer Sensoreinheit; und
- Fig. 7: eine schematische Perspektivansicht des Kupplungsgliedes;

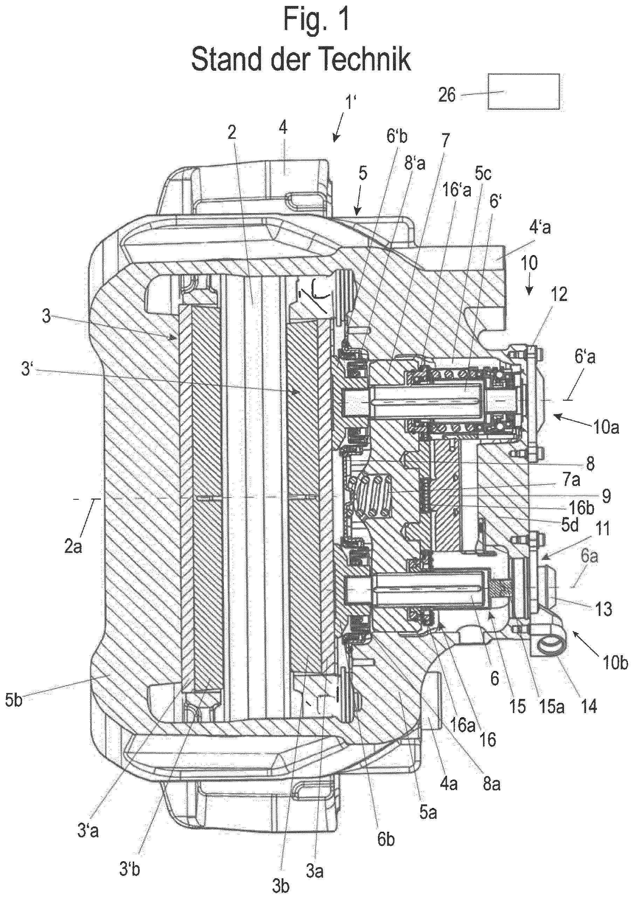

**Fig. 1** zeigt eine schematische Schnittansicht einer Scheibenbremse 1' nach dem Stand der Technik.

Unter dem Begriff "oben" bzw. "Oberseite" ist die Seite des jeweiligen Bauteils zu verstehen, welche im eingebauten Zustand in der Scheibenbremse 1, 1' zur Zuspannseite weist. Die "Unterseite" des jeweiligen Bauteils bzw. "unten" weist dann zur Bremsscheibe 2.

Die Scheibenbremse 1' nach dem Stand der Technik wird im Folgenden zur Übersicht nur kurz beschrieben. Aufbau und Funktion sind in dem Dokument DE 10 2012 108 672 B3 ausführlich erläutert.

Die Scheibenbremse 1' ist hier eine zweistempelige Bremse und umfasst eine Bremsscheibe 2 mit einer Bremsscheibenachse 2a, Bremsbeläge 3, 3', einen Bremsträger 4, einen Bremssattel 5, eine Zuspannvorrichtung mit zwei Gewindestempeln 6, 6', einer Brücke 7 und einem Bremsdrehhebel 9, eine Verschleißnachstellvorrichtung 10 mit einer Nachstelleinrichtung 10a und einer Mitnehmereinrichtung 10b mit einem Verschleißsensor 11, sowie eine Synchroneinrichtung 16. Weiterhin ist der Scheibenbremse 1' ein Steuergerät 26 zugeordnet.

Beiderseits der Bremsscheibe 2 ist ein Bremsbelag 3, 3' mit jeweils einem Bremsbelagträger 3a, 3'a, auf dem jeweils ein Reibbelag 3b, 3'b aufgebracht ist, angeordnet. Der Bremsbelag 3, welcher sich zwischen Zuspannabschnitt 5a und der Bremsscheibe 2 befindet, wird als zuspannseitiger Bremsbelag 3 bezeichnet, wobei der Bremsbelag 3' auf der anderen Seite der Bremsscheibe 2 zwischen dem Rückenabschnitt 5b und der Bremsscheibe 2 rückenseitiger bzw. reaktionsseitiger Bremsbelag 3' genannt wird.

Die Bremsscheibe 2 ist von dem, hier als Schwimmsattel ausgeführten, Bremssattel 5 übergriffen. Der Bremssattel 5 weist einen Zuspannabschnitt 5a und einen Rückenabschnitt 5b auf und ist über Sattelführungen 4a, 4'a mit dem Zuspannabschnitt 5a an dem ortsfesten Bremsträger 4 in Richtung der Bremsscheibenachse 2a verschiebbar geführt angebracht. In dem Zuspannabschnitt 5a des Bremssattels 5 ist die Zuspannvorrichtung in einem Innenraum 5c des Zuspannabschnitts 5a angeordnet.

Der zuspannseitige Bremsbelagträger 3a steht mit den Gewindestempeln 6, 6' über Druckstücke 6b, 6'b, die an Enden der Gewindestempel 6, 6' angeordnet sind, in Kontakt. Der andere, reaktionsseitige Bremsbelagträger 3'a ist auf der anderen Seite der Bremsscheibe im Rückenabschnitt 5b des Bremssattels 5 festgelegt. Die Gewindestempel 6, 6' sind jeweils in der Brücke 7, die auch als Traverse bezeichnet wird, in Gewinden verdrehbar angeordnet.

Die Brücke 7 steht auf einer Seite, die von der Bremsscheibe 2 weg weist, mit dem Bremsdrehhebel 9 in Kontakt, und ist auf der gegenüberliegenden zur Bremsscheibe 2 weisenden Seite mit einer Rückstellfeder 7a versehen, die sich auf einer Bodenplatte 8 abstützt.

Die Bodenplatte 8 verschließt den Innenraum 5c des Zuspannabschnitts 5a des Bremssattels 5, wobei sich die Gewindestempel 6, 6' mit den Druckstücken 6b, 6'b jeweils durch eine Öffnung durch die Bodenplatte 8 erstrecken. Dabei sind die Druckstücke 6b, 6'b jeweils durch eine Dichtung 8a, 8'a, hier ein Faltenbalg, gegenüber der Bodenplatte 8 abgedichtet.

Der Innenraum 5c des Zuspannabschnitts 5a ist zudem im Bereich der anderen Enden der Gewindestempel 6, 6' durch eine Außenwand 5d festgelegt. In der Außenwand 5d sind Durchgangsöffnungen koaxial zu den Gewindestempeln 6, 6' eingebracht. Die zu dem Gewindestempel 6' mit der Nachstelleinrichtung 10a gehörende Durchgangsöffnung in den Innenraum 5c ist durch einen Deckel 12 dicht verschlossen. Die andere Durchgangsöffnung, welche dem anderen Gewindestempel 6 mit der Mitnehmereinrichtung 10b zugeordnet ist, ist durch ein Sensorgehäuse 13 mit dem Verschleißsensor 11 dicht verschlossen.

Die Synchroneinrichtung 16 ist mit Synchronrädern 16a, 16'a und einem Synchronmittel 16b, das hier eine Kette ist, auf der Brücke 7 angeordnet.

Die Brücke 7 und somit die in ihr eingeschraubten Gewindestempel 6, 6' sind von dem Bremsdrehhebel 9 in Richtung der Bremsscheibenachse 2a verstellbar. Eine Bewegung auf die Bremsscheibe 2 zu wird als Zuspannbewegung bezeichnet, und eine Bewegung in Gegenrichtung wird Lösebewegung genannt. Mittels der Rückstellfeder 7a wird die Brücke 7 bei der Lösebewegung in die in Fig. 1 gezeigte gelöste Stellung der Scheibenbremse 1 zurück verstellt.

Ein Abstand zwischen den Bremsbelägen 3, 3' und der Bremsscheibe 2 in der gelösten Stellung wird als Lüftspiel bezeichnet.

Die Verschleißnachstellvorrichtung 11 ist zur Verschleißnachstellung eines vorher festgelegten Lüftspiels, das als Nominallüftspiel bezeichnet wird, ausgebildet. Unter dem Begriff "Nachstellung" ist hier eine Lüftspielverkleinerung zu verstehen.

Die Verschleißnachstellvorrichtung 10 umfasst hier die Nachstelleinrichtung 10a und die Mitnehmereinrichtung 10b. Die Nachstelleinrichtung 10a ist an dem einen Gewindestempel 6' zu diesem und einer zu Nachstellerachse 6'a, welche die Mittelachse des Gewindestempels 6' ist, angeordnet. Eine detaillierte Beschreibung der Nachstelleinrichtung 10a kann dem Dokument DE 10 2012 108 672 B3 entnommen werden.

Die Mitnehmereinrichtung 10b ist koaxial zu dem anderen Gewindestempel 6 und einer Mitnehmerachse 6a, welche die Mittelachse des Gewindestempels 6 bildet, angeordnet. Im Gegensatz zu dem Gewindestempel 6' der Nachstelleinrichtung 10a ist auf den Gewindestempel 6 eine Aufsatzhülse 15 drehfest aufgesetzt. Das zuspannseitige Ende der Aufsatzhülse 15 ist als eine Kupplung 15a ausgebildet. Mittels dieser Kupplung 15a ist die Aufsatzhülse 15 mit dem Verschleißsensor 11 gekoppelt.

Ein Aufnehmerelement des Verschleißsensors 11 ist ein Winkelsensor, z.B. ein Potentiometer, und erfasst die Winkellage des Gewindestempels 6 um die Mitnehmerachse 6a. Die Auswertung dieser Winkellage lässt einen Rückschluss auf den Verschleißzustand der Bremsbeläge 3, 3' und der Bremsscheibe 2 zu, denn der Gewindestempel 6 ist über die Synchroneinrichtung 16 mit dem anderen Gewindestempel 6' gekoppelt. So dient der Verschleißsensor 11 zur Erfassung des Verschleißzustands der Bremsbeläge 3, 3' und der Bremsscheibe 2. Der Verschleißsensor 11 ist über einen Anschluss 14, die eine Schnittstelle, z.B. eine Kabelschnittstelle, durch nicht gezeigte Kabel (elektrisch oder optisch leitend) mit der Steuereinrichtung 100, welche die Auswertung vornehmen kann, verbunden.

Die Mitnehmerachse 6a, die Nachstellerachse 6'a und die Bremsscheibenachse 2a sind parallel zueinander angeordnet.

Die Nachstelleinrichtung 10a der Verschleißnachstellvorrichtung 10 steht über einen nicht gezeigten Antrieb mit dem Bremsdrehhebel 9 in Zusammenwirkung.

Die Nachstelleinrichtung 10a und die Mitnehmereinrichtung 10b sind durch die Synchroneinrichtung 16 derart gekoppelt, dass eine Verdrehbewegung des Gewindestempels 6' um die Nachtstellerachse 6'a eine entsprechende Verdrehbewegung des anderen Gewindestempels 6 um die Mitnehmerachse 6a bewirkt wird und umgekehrt. Eine Verdrehbewegung zur Nachstellung der Gewindestempel 6, 6' bei Auftreten von Belagverschleiß wird durch die Nachstelleinrichtung 10a, angetrieben durch den Bremsdrehhebel 9, erzeugt. Für eine weitere Beschreibung wird auf das Dokument DE 10 2012 108 672 B3 verwiesen.

Die Synchroneinrichtung 16 ist hier auf einer Oberseite oder Brücke 7 zwischen der Brücke 7 und dem Bremsdrehhebel 9 angeordnet und umfasst ein Koppelrad 16'a, das mit dem Gewindestempel 6' mit der Nachstelleinrichtung 10a gekoppelt ist, ein weiteres Koppelrad 16a, das mit dem anderen Gewindestempel 6 und mit der Mitnehmereinrichtung 10b gekoppelt ist, und ein Synchronmittel 16b, mit welchem die Koppelräder 16a und 16'a gekoppelt sind. Das Synchronmittel 16b ist hier eine Kette. So sind die Koppelräder 16a, 16'a als Kettenräder ausgebildet. Damit ist eine synchrone Drehbewegung der Gewindestempel 6, 6' bei Verschleißnachstellvorgängen (Antrieb durch die Nachstelleinrichtung 10a) und Einstellungen bei Wartungsarbeiten, z.B. Belagwechsel, (manueller Antrieb über ein nicht gezeigtes Betätigungsende der Mitnehmereinrichtung 10b) gewährleistet.

Gleichzeitig wird auf diese Weise der Verschleißsensor 11, der mit der Mitnehmereinrichtung 10b gekoppelt ist, in Abhängigkeit von der Verschleißnachstellung der Nachstelleinrichtung 10a verstellt.

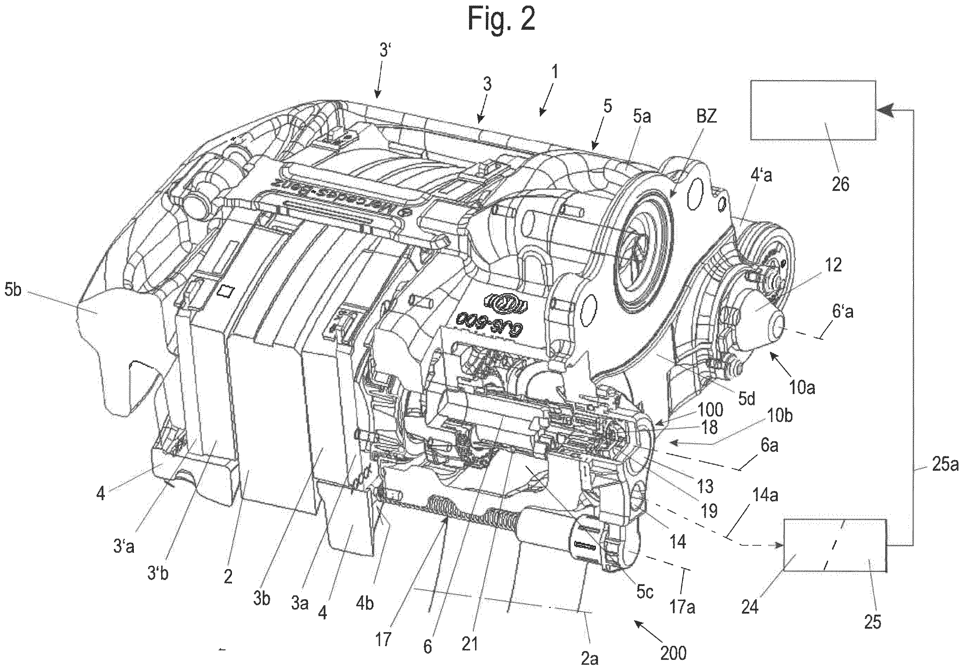

In den **Figuren 2 bis 4** sind perspektivische schematische Teilschnittansichten eines Ausführungsbeispiels einer erfindungsgemäßen Scheibenbremse 1 gezeigt.

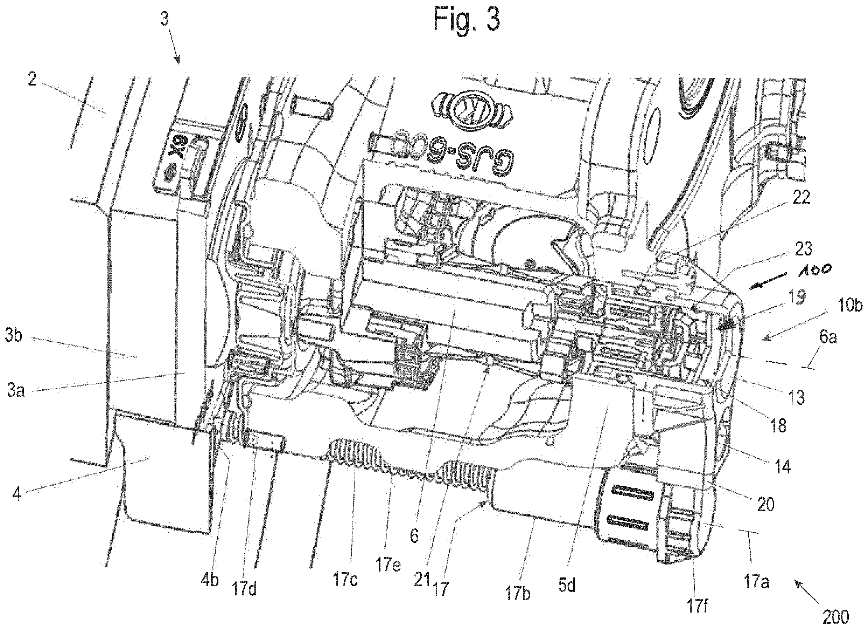

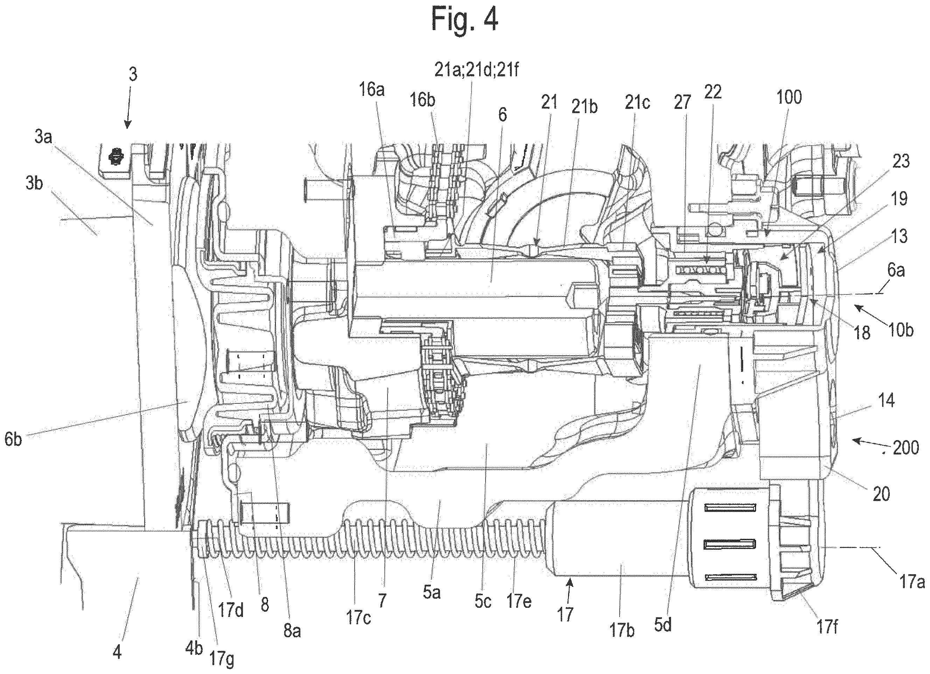

**Fig. 2** stellt die erfindungsgemäße Scheibenbremse 1 mit einer Zustandsüberwachungsanordnung 200 dar. Die Scheibenbremse 1 ist mit Ansicht der Außenwand 5d des Zuspannabschnitts 5a des Bremssattels 5 mit einem Bremszylinderflansch BZ, an welchem ein Bremsantrieb, z.B. ein Pneumatikzylinder, angebracht wird. Ein Teilschnitt verläuft in Richtung der Bremsscheibenachse 2a in einer senkrechten Ebene durch die Bremsscheibe 2, die Bremsbeläge 3, 3', den Bremsträger 4, den Zuspannabschnitt 5a und den Rückenabschnitt 5b des Bremssattels 5. Zudem verlaufen eine senkrechte Schnittebene und eine dazu waagerechte Schnittebene in der Mitnehmerachse 6a durch die Mitnehmereinrichtung 10b mit dem Gewindestempel 6. **Fig. 3** und **Fig. 4** zeigen dazu vergrößerte Darstellungen.

Die Zustandsüberwachungsanordnung 200 in dem dargestellten Ausführungsbeispiel umfasst vorzugsweise eine, mehrere oder sämtliche folgender Zustandsüberwachungen:
▪ Sattelpositionsüberwachung (Position des Bremssattels 5 in Richtung der Bremsscheibenachse 2a)
▪ Dichtungszustand-Überwachung des Innenraums 5c des Zuspannabschnitts 5a des Bremssattels 5
▪ Heißläuferüberwachung der Reibpartner Bremsbeläge 3, 3' und Bremsscheibe 2
▪ Lüftspielüberwachung der Reibpartner Bremsbeläge 3, 3' und Bremsscheibe 2
▪ Hebel- bzw. Zuspannhubüberwachung (Bremsdrehhebel 9, Brücke 7)
▪ Überwachung der Feststellbremse
▪ Überwachung des mechanischen Zustandes der Sattelführungen 4a, 4'a
▪ Überwachung des mechanischen Zustandes der inneren Mechanik
▪ Hystereseüberwachung
▪ Summenverschleissüberwachung der Reibpartner Bremsbeläge 3, 3' und Bremsscheibe 2
▪ Scheibenverschleissüberwachung der Bremsscheibe 2
▪ Einzelverschleissüberwachung der Reibpartner Bremsbeläge 3, 3' und Bremsscheibe 2
▪ Temperaturüberwachung

Die Zustandsüberwachungsanordnung 200 umfasst einen Sattelsensor 17, einen Summenverschleißsensor 18, einen Drucksensor 19, ein Kupplungsglied 21 und eine Schalteinheit 25. Zudem kann die Zustandsüberwachungsanordnung 200 zumindest einen nicht gezeigten, aber vorstellbaren Temperatursensor aufweisen.

Damit ist es möglich, ein, mehrere oder sämtliche folgender zu messenden Zustandsinformationen der Scheibenbremse 1 zu erfassen:
▪ Messen der Belagdicke bzw. des Einzelverschleißes der Reibpartner Bremsbelag 3, 3' und Bremsscheibe 2
▪ Messen des Summenverschleißes der Reibpartner Bremsbelag 3, 3' und Bremsscheibe 2
▪ Messung der Sattelposition, d.h. der Position des Bremssattels 5 in Richtung der Bremsscheibenachse 2a, um Rückschlüsse auf Zustand der Sattelführung(en) 4a, 4'a zu erlangen
▪ Messung des Sattelinnenraumdruckes, d.h. des Drucks des Innenraums 5c des Zuspannabschnitts 5a des Bremssattels 5, zur Zustandsüberwachung der Dichtungen der Bodenplatte 8, der Dichtungen 8a, 8'a der Druckstücke 6b, 6'b, der Dichtungen von Deckel 12 und Sensorgehäuse 13, u.dgl.
▪ Messung des Hebelhubs bzw. Hub der Zuspanneinheit (Bremsdrehhebel 9 bzw. Brücke 7)
▪ Messung der Temperatur der Bremsanlage bzw. eines Temperaturäquivalents (Druck) zur Zustandsüberwachung (Heißläufer)
▪ Überwachung der Feststellbremse bzw. Plausbilisierung
▪ Überwachung des Zustandes der inneren Mechanik
▪ Überwachung der Hysterese
▪ Speichern von spezifischen Lastkollektiven dezentral in der Bremseinheit bzw. in dem Steuergerät 26 oder/und zusätzlichen Speichermedien

Die Sensoren 17, 18, 19 (und Temperatursensor/en) stehen hierbei kabelgebunden oder kabellos mit einer elektronischen Schalteinheit 25 in Verbindung. Die elektronische Schalteinheit 25 tauscht Informationen kabelgebunden oder kabellos (Verbindung 25a) mit dem externen Steuergerät 26 aus. Die Schalteinheit 25 sammelt auch über das Sensorsystem in bzw. an der Scheibenbremse 1 spezifische Informationen und leitet diese an das externe Steuergerät 26 zur Überführung in spezifische Lastkollektive weiter.

Das Sensorsystem ist hierbei modular aufgebaut, während die Schnittstellen im Sensorsystem und von der Schalteinheit 25 zum externen Steuergerät 26, unabhängig von dem verwendeten Sensorumfang, beibehalten werden. Auf diese Weise ist ein einfacher modularer Upgrade der Überwachungsmöglichkeiten machbar, da die bestehende Verbindung zwischen der Schalteinheit 25 und dem externen Steuergerät 26 unverändert bleibt. Die notwendige Auswertung erfolgt mithilfe eines Mikrocontrollers in der Schalteinheit 25 oder/und durch die externe Steuereinheit/das externe Steuergerät 26.

Der Sattelsensor 17 ist nicht in dem Bremssattel 5 angebracht, sondern ist außerhalb des Zuspannabschnitts 5a des Bremssattels 5 unterhalb der Mitnehmereinrichtung 10b parallel zu dieser angeordnet und sensiert auf einen Trägerbeam 4b des Bremsträgers 4 auf der Seite des Bremsträgers 4, mit welcher der Bremsträger 4 hier ortsfest an einem Fahrzeug befestigt ist. Der Sattelsensor 17 wird unten noch näher erläutert.

Der Summenverschleißsensor 18 und der Drucksensor 19 bilden zusammen mit einem Spindeltrieb 22 und einem Planetengetriebe 23 eine Sensoreinheit 100. Die Sensoreinheit 100 und das Kupplungsglied 21 sind in der Mitnehmereinrichtung 10b angeordnet, wobei der Drucksensor 19 auf einer Platine des Summenverschleißsensors 18 integriert ist.

Das Kupplungsglied 21 ist koaxial zu dem Gewindestempel 6 und zu der Mitnehmerachse 6'a hülsenartig über dem Gewindestempel 6 der Mitnehmereinrichtung 10b angeordnet und über einen Antriebsabschnitt 21a an einem Ende mit dem Gewindestempel 6 drehfest gekoppelt. Das andere Ende des Kupplungsgliedes 21 steht über einen Abtriebsabschnitt 21c sowohl mit dem Spindeltrieb 22 als auch mit dem Planetengetriebe 23 in Verbindung. Der Spindeltrieb 22 seinerseits ist auch mit dem Planetengetriebe 23 gekoppelt, welches in Zusammenwirkung mit dem Summenverschleißsensor 18 steht.

Das Kupplungsglied 21 überträgt sowohl eine Drehbewegung der Gewindespindel 6 als auch eine lineare Hubbewegung der Brücke 7. Die Drehbewegung des Kupplungsgliedes 21 wird dabei auf einen ersten Eingang 23a des Planetengetriebes 23 übertragen, wobei die lineare Hubbewegung des Kupplungsgliedes 21 auf den Spindeltrieb 22 übertragen wird. Mittels des Spindeltriebs 22 wird diese Hubbewegung in nicht weiter beschriebener Weise in eine Drehbewegung umgewandelt und in einen zweiten Eingang 23b des Planetengetriebes 23 eingeleitet. Das Kupplungsglied 21 wird unten noch weiter beschrieben.

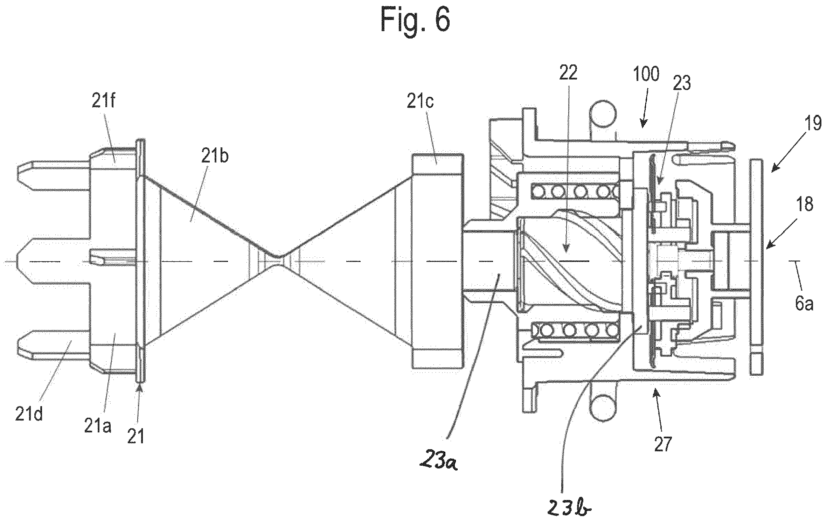

Das Kupplungsglied 21, der Spindeltrieb 22, das Planetengetriebe 23 und der Summenverschleißsensor 18 sind im Verlauf der Mitnehmerachse 6a ausgehend von der Brücke 7 hintereinander angeordnet. Der Spindeltrieb 22, das Planetengetriebe 23 und der Summenverschleißsensor 18 wie auch der Drucksensor 19 sind innerhalb des Sensorgehäuses 13 auf bzw. in einem Träger 27 (siehe Fig. 6) angeordnet. Das Sensorgehäuse 13 erstreckt sich durch die der Mitnehmereinrichtung 10b zugeordnete Durchgangsöffnung der Außenwand 5d und steht von der Außenwand 5d nach außen hervor. Der hervorstehende, kappenartige Abschnitt des Sensorgehäuses 13 weist eine seitliche Erweiterung 20 auf, die sich senkrecht nach unten erstreckt und sowohl eine Verbindung zu einem Anschlussabschnitt 17f des Sattelsensors 17 als auch den Anschluss 14 aufweist.

An dem Anschluss 14 ist eine Verbindung 14a angeschlossen, welche mit der Schalteinheit 25 verbunden ist. Die Verbindung 14a bildet eine gemeinsame Verbindungsleitung von Sattelsensor 17, Summenverschleißsensor 18 und Drucksensor 19 mit der Schalteinheit 25. Zudem weist die Schalteinheit 25 eine oder mehrere Schnittstellen 24 zu den Sensoren auf. Die Schalteinheit 25 ihrerseits steht ist mit einer weiteren Verbindung 25a mit dem Steuergerät 100 verbunden. Die Verbindungen 14a und 25a können kabelgebunden oder kabellos ausgeführt sein.

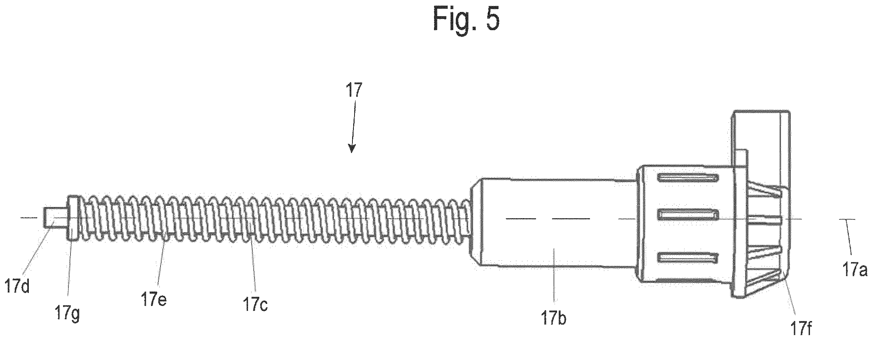

**Fig. 5** zeigt eine schematische Seitenansicht des Sattelsensors 17.

Der Sattelsensor 17 umfasst ein Gehäuse 17b mit dem Anschlussabschnitt 17f, eine Stange 17c und eine Feder 17e. Das Gehäuse 17b, die Stange 17c und die Feder 17e sind koaxial zu einer Sattelsensorachse 17a angeordnet. Die Stange 17c verläuft in Richtung der Sattelsensorachse 17a und ist an einem freien Ende mit einem Kontaktabschnitt 17d versehen. Das andere Ende der Stange 17c erstreckt sich in das Gehäuse 17b, ist in diesem in Richtung der Sattelsensorachse 17b längsverschiebbar geführt und mit einem Linearsensor, z.B. Potentiometer, Hall-Sensor o.Ä. gekoppelt, was nicht dargestellt aber leicht vorstellbar ist. Auf der Stange 17c ist die Feder 17e aufgeschoben und stützt sich an dem und an einem Kragen 17g, der im Bereich des freien Endes der Stange 17c angebracht und fest mit der Stange 17c verbunden ist, ab. Der Sattelsensor 17 ist über seinen Anschlussabschnitt 17f mit dem Sensorgehäuse 13 über die Verbindung 20 verbunden. Der Anschlussabschnitt 17f und die Verbindung 20 sind als steckbare und wieder lösbare Verbindung ausgebildet. Die Verbindung 20 bildet sowohl eine mechanische Halterung für den Sattelsensor 17 als auch eine elektrisch leitende Verbindung für dessen Linearsensor mit dem Anschluss 14. Die Verbindung 20 kann auch andere Formen aufweisen, die eine geeignete und rüttelfeste Halterung für den Sattelsensor 17 bilden. Zusätzlich können weitere Halterungen für den Sattelsensor 17 am Bremssattel 5 vorgesehen sein, die nicht gezeigt, aber vorstellbar sind.

Der Sattelsensor 17 ist unterhalb des Zuspannabschnitts 5a des Bremssattels 5 so angebracht, dass die Sattelsensorachse 17a parallel zu der Mitnehmerachse 6a und parallel zu der Bremsscheibenachse 2a verläuft. Dabei steht der Kontaktabschnitt 17d des freien Endes der Stange 17c des Sattelsensors 17 mit dem Trägerbeam 4b des Bremsträgers 4 in Kontakt. Dazu wird der Kontaktabschnitt 17d durch die Federkraft der Feder 17e gegen den Bremsträger 4 gedrückt.

Auf diese Weise wird eine Verschiebung des Bremssattels 5 in Richtung der Bremsscheibenachse 2a auf den Sattelsensor 17 übertragen, da dieser mit seinem Gehäuse 7b über das Sensorgehäuse 13 fest mit dem Zuspannabschnitt 5a des Bremssattels 5 verbunden ist und dessen Verschiebung gegenüber dem ortsfesten Bremsträger 4 als Referenz erfährt.

Unabhängig davon sind weitere Referenzpunkte zur Sensierung der Position des Bremssattels 5 möglich, die Erfindung beschränkt sich nicht auf den Trägerbeam als Referenzpunkt, dieser wird nur bei dem hier beschriebenen Ausführungsbeispiel verwendet. Als Referenzpunkt eignen sich hierbei alle feststehenden Teile. Diese umfassen sowohl den Bremsträger 4 als auch ortsfeste Achsteile des Fahrzeugs, dem die Scheibenbremse 1 zugeordnet ist. Ebenfalls ist eine umgekehrte Vorgehensweise möglich, wobei der Sattelsensor 17 mit seinem Gehäuse 17b bzw. seinem Anschlussabschnitt 17f an einem ortsfestem Achsteil bzw. an dem Bremsträger 4 befestigt ist. Dabei wird der Referenzpunkt vom Bremssattel 5 definiert.

Der Sattelsensor 17 übernimmt hier als ein Linearsensor die Überwachungsfunktionen:
▪ Positionsüberwachung des Bremssattels 5
▪ Einzelverschleißüberwachung
▪ Überwachung des mechanischen Zustandes der Sattelführungen 4a, 4'a (keine Schwergängigkeit)

Durch die Auswertung der Sattelposition, d.h. der Position des Bremssattels 5, in Richtung der Bremsscheibenachse 2a, kann beim Betätigen der Scheibenbremse 1 der Zustand des Sattelführungssystems bzw. der Sattellagerung (Sattelführungen 4a, 4'a) mittels des Sattelsensors 17 überwacht werden, sowie der Einzelbelagverschleiß des rückenseitigen Bremsbelags 3' überwacht werden.

Der Summenverschleißsensor 18 (mit einem herkömmlichen Planetengetriebe 22 mit zwei Eingängen, das z.B. in dem Dokument DE 10 2013 112 813 A1 illustriert ist) mit integrierter Hub-Überwachung weist folgende Überwachungsfunktionen auf:
▪ Summenverschleissüberwachung
▪ Scheibenverschleissüberwachung (nach Belagwechsel)
▪ Hystereseüberwachung
▪ Überwachung des mechanischen Zustandes der inneren Mechanik
▪ Überwachung der Feststellbremse
▪ Hebel- bzw. Zuspannhubüberwachung
▪ Lüftspielüberwachung

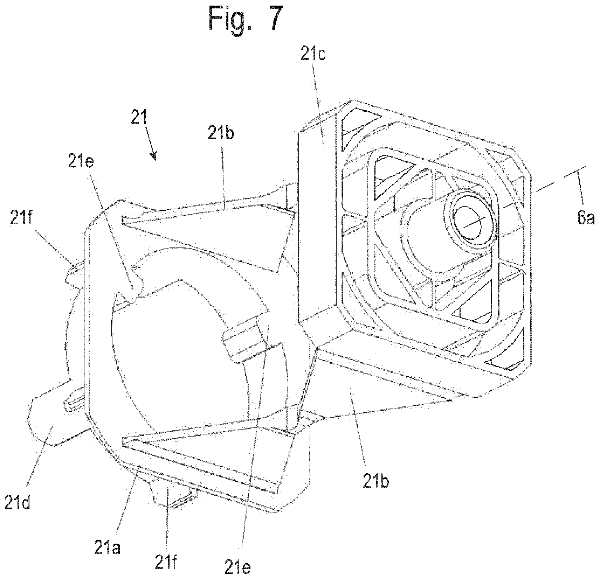

In **Fig. 6** ist eine schematische Seitenansicht des Kupplungsgliedes 21 und eine Teilschnittansicht einer Sensoreinheit 100 gezeigt. Eine schematische Perspektivansicht des Kupplungsgliedes 21 ist in **Fig. 7** dargestellt.

Das Kupplungsglied 21 umfasst einen Antriebsabschnitt 21a, zwei Verbindungsabschnitte 21b, einen Abtriebsabschnitt 21c, Zungen 21d, innere Vorsprünge 21e und äußere Vorsprünge 21f. Das Kupplungsglied 21 ist koaxial zur Mitnehmerachse 6a angeordnet.

Der Antriebsabschnitt 21a des Kupplungsgliedes 21 ist über die Zungen 21d und äußeren Vorsprünge 21f mit dem zu dem Gewindestempel 6 der Mitnehmereinrichtung 10b zugehörigen Koppelrad 16a der Synchroneinrichtung 16 drehfest gekoppelt. Zudem stehen die inneren Vorsprünge 21e mit Nuten des Gewindestempels 6 zur axialen Führung des Kupplungsgliedes 21 und drehfesten Kopplung in Eingriff.

Zwei sich gegenüberstehend angeordnete Verbindungsabschnitte 21b verbinden den Antriebsabschnitt 21a und den Abtriebsabschnitt 21c. Jeder Verbindungsabschnitt 21b besteht aus zwei dreieckförmigen Abschnitten, deren Spitzen verbunden sind, und wobei die Grundseite des einen dreieckförmigen Abschnitts mit dem Antriebsabschnitt 21a verbunden ist und die Grundseite des anderen dreieckförmigen Abschnitts mit dem Abtriebsabschnitt 21c verbunden ist. Auf diese Weise sind der Antriebsabschnitt 21a und der Abtriebsabschnitt 21c rotatorisch und translatorisch gekoppelt.

Der Abtriebsabschnitt 21c des Kupplungsgliedes 21 ist einerseits mit dem ersten Eingang 23a des Planetengetriebes 23 und andererseits mit dem Spindeltrieb 22 in nicht näher beschriebener Weise gekoppelt.

Der Spindeltrieb 22, das Planetengetriebe 23, der Summenverschleißsensor 18 und der Drucksensor 19 bilden die Sensoreinheit 100 und sind an dem Träger 27 der Sensoreinheit 100 angebracht. Die Sensoreinheit 100 ist mit dem Träger 27 in dem Sensorgehäuse 13 (siehe Fig. 4) und zum Teil in dem der Mitnehmereinrichtung 10a zugeordneten Durchgangsloch der Außenwand 5d des Zuspannabschnitts 5a des Bremssattels 5 angeordnet.

Zur Hubsensierung und Realisierung der beschriebenen Zustandsüberwachungs-Anwendungen wird die lineare Hubbewegung der Zuspanneinheit (Bremshebel 9, Brücke 7) durch das Kupplungsglied 21 auf den Spindeltrieb 22 übertragen. Dieser wandelt die lineare Bewegung des Kupplungsglieds 21 in eine Rotation um und leitet diese in das verwendete Planetengetriebe 23 über den zweiten Eingang 23b des Planetengetriebes 23 ein. Durch den dem ersten Eingang 23a überlagerten Antrieb des zweiten Eingangs 23b kann die der Hubbewegung der auf diese Weise umgewandelten Rotation entsprechende Winkeländerung im Summenverschleißsensor 18 erfasst und ausgewertet werden. Ebenfalls kann durch intelligente Auswertung des Winkelsignals die Überwachung der Feststellbremse, bei fehlerhafter Betätigung, sowie die Hysterese und der Zustand der inneren Mechanik überwacht werden.

Das Kupplungsglied 21 zwischen dem Summenverschleißsensor 18 und der Brücke/Spindel-Baugruppe (d.h. Brücke 7 mit den eingeschraubten Gewindestempeln 6, 6') leitet auf diese Weise nicht nur die durch Nachstellvorgänge bewirkte Drehbewegung der Gewindestempel 6, 6' in das Planetengetriebe 23 des Summenverschleißsensors 18 ein, sondern überträgt ebenfalls die lineare Hubbewegung der Brücke/Spindel-Baugruppe beim Betätigen der Bremse auf den nachgeschalteten Spindeltrieb 22. Durch die Übersetzungsverhältnisse der Antriebseingänge, d.h. erster Eingang 23a und zweiter Eingang 23b, des Planetengetriebes 23 kann die Messung der Hubbewegung von der Verschleißmessung differenziert werden. Dabei ist hier in nicht näher beschriebener Weise der erste Eingang 23a des Planetengetriebes 23 durch ein nicht bezeichnetes Sonnenrad des Planetengetriebes 23 gebildet. Den zweiten Eingang 23b des Planetengetriebes 23 bildet hier ein nicht bezeichneter Planetenträger des Planetengetriebes 23.

Das Kupplungsstück 21 ist durch seinen besonderen, elastischen Aufbau in der Lage, die relevanten Bewegungen (Rotation, Translation) nahezu spielfrei zu übertragen, jedoch radiale Bewegungen durch Störgrößen wie Vibrationen etc. auszugleichen.

Der Drucksensor 19 ist auf einer Platine des Summerverschleißsensors 18 integriert, was nicht näher dargestellt aber leicht vorstellbar ist. Mit dem Drucksensor 19 sind folgende Überwachungsfunktionen möglich:
▪ Zustandsüberwachung der Satteldichtungen
▪ Heißläuferüberwachung
▪ Lüftspielplausibilisierung

Da der Druck einen physikalischen Zusammenhang mit der Temperatur hat (thermische Zustandsgleichung), wird durch eine Überwachung des Innendrucks des Innenraums 5c des Zuspannabschnitts 5a des Bremssattels 5 eine Heißläuferüberwachung durch ein temperaturäquivalentes Signal bereitgestellt. Ebenfalls kann durch die kontinuierliche Drucküberwachung des Innenraums 5c der Zustand der Satteldichtungen überwacht werden. Ein plötzlicher Abfall des Drucks bzw. keine Erhöhung des Sattelinnendrucks bei einer Bremsbetätigung könnte auf fehlerhafte Dichtungen hindeuten.

Die Anordnung 200 zur Zustandsüberwachung der Scheibenbremse 1 wird durch die modularen Erweiterungsmöglichkeiten der Sensoren 17, 18, 19 baukastenartig bis zu einer vollumfassenden Zustandsüberwachung erweitert. Dadurch wird eine Kombination verschiedener Ausführungsformen ermöglicht.

Ausgehend von der Ausgangsvariante mit dem Summenverschleißsensor 18 ergeben sich weitere Ausführungsvarianten:
▪ Summenverschleißsensor 18 und Drucksensor 19
▪ Summenverschleißsensor 18 und Hub-Überwachung mittels Spindeltrieb 22
▪ Summenverschleißsensor 18 und Sattelpositionssensor 17
▪ Summenverschleißsensor 18, Hub-Überwachung mittels Spindeltrieb 22 und Drucksensor 19
▪ Summenverschleißsensor 18, Drucksensor 19 und Sattelpositionssensor 17
▪ Summenverschleißsensor 18, Hub-Überwachung mittels Spindeltrieb 22 und Sattelpositionssensor 17
▪ Summenverschleißsensor 18, Hub-Überwachung mittels Spindeltrieb 22, Sattelpositionssensor 17 und Drucksensor 19

Durch den modularen Aufbau kann ebenfalls auf verschiedene Gehäusevarianten verzichtet werden und demnach entstehender Zusatzaufwand für zusätzliche Varianten vorbeugend verhindert werden.

Zur Übertragung der Daten wird die bestehende Datenverbindung, z.B. 14a zur Schalteinheit 25 verwendet. Die Übertragung kann über eine gemeinsame analoge Datenleitung oder über eine digitale Datenverbindung, bspw. mit Busprotokoll, erfolgen.

Bei Verwendung einer analogen Datenleitung wird mittels sog. Multiplexern ein sequentielles Einlesen der Überwachungsdaten der einzelnen Sensoren gewährleistet. Diese sind Bestandteil des sog. ASIC (Anwendungsspezifische integrierte Schaltung), welches auf der verfügbaren Platine des Summenverschleißsensors 18 auf angeordnet ist.

Die digitale Datenverbindung weist eine Verwendung von digitalem Bus-Protokoll und einen Master in dem externen Steuergerät 26 (z.B. EPM) auf.

Bei einer analogen Datenverbindung erfolgt eine Verwendung von Multiplexern zum sequentiellen Einlesen der Sensordaten. Ein zeitlich abgestimmtes Einlesen wird durchgeführt, wodurch eine einfache und fehlerlose Trennung der Signale (z.B. in der Schalteinheit 25) vor einer Übertragung in das externes Steuergerät 26 (z.B. EPM) ausgeführt wird.

Für eine Temperaturüberwachung kann - unabhängig von der jeweiligen verwendeten Kombination der Sensoren - kann der modulare Aufbau um eine Temperaturmessung und deren Schnittstelle ergänzt werden. Denkbar ist eine Temperaturmessung sowohl innerhalb als auch außerhalb des Bremssattels 5.

Die Anordnung 200 zur Zustandsüberwachung der Scheibenbremse 1 kann zudem über zusätzliche freie Schnittstellen zur Nachrüstung weiterer Sensoren verfügen.

Die Anordnung 200 zur Zustandsüberwachung der Scheibenbremse 1 kann mit dem modularen Aufbau der Sensoren kann sowohl für pneumatisch zugespannte Scheibenbremsen im Nutzfahrzeugbereich, als auch bei allen anderen Antriebsarten von Scheibenbremsen zum Einsatz kommen.

Die Erfindung ist im Rahmen der beigefügten Ansprüche modifizierbar.

### BEZUGSZEICHENLISTE

- 1, 1': Scheibenbremse
- 2: Bremsscheibe
- 2a: Bremsscheibenachse
- 3, 3': Bremsbelag
- 3a, 3'a: Trägerplatte
- 3b, 3'b: Reibbelag
- 4: Bremsträger
- 4a, 4'a: Sattelführung
- 4b: Trägerbeam
- 5: Bremssattel
- 5a: Zuspannabschnitt
- 5b: Rückenabschnitt
- 5c: Innenraum
- 5d: Außenwand
- 6, 6': Gewindestempel
- 6a: Mitnehmerachse
- 6'a: Nachstellerachse
- 6b, 6'b: Druckstück
- 7: Brücke
- 7a: Rückstellfeder
- 8: Bodenplatte
- 8a, 8'a: Dichtung
- 9: Bremsdrehhebel
- 10: Verschleißnachstellvorrichtung
- 10a: Nachstelleinrichtung
- 10b: Mitnehmereinrichtung
- 11: Verschleißsensor
- 12: Deckel
- 13: Sensorgehäuse
- 14: Anschluss
- 14a: Verbindung
- 15: Aufsatzhülse
- 15a: Kupplung
- 16: Synchroneinrichtung
- 16a, 16'a: Koppelrad
- 16b: Synchronmittel
- 17: Sattelsensor
- 17a: Sattelsensorachse
- 17b: Gehäuse
- 17c: Stange
- 17d: Kontaktabschnitt
- 17e: Feder
- 17f: Anschlussabschnitt
- 17g: Kragen
- 18: Summenverschleißsensor
- 19: Drucksensor
- 20: Verbindung
- 21: Kupplungsglied
- 21a: Antriebsabschnitt
- 21b: Verbindungsabschnitt
- 21c: Abtriebsabschnitt
- 21d: Zunge
- 21e, 21f: Vorsprung
- 22: Spindeltrieb
- 23: Planetengetriebe
- 23a, 23b: Eingang
- 24: Schnittstelle
- 25: Schalteinheit
- 25a: Verbindung
- 26: Steuergerät

- 100: Sensoreinheit
- 200: Anordnung

- BZ: Bremszylinderflansch

## Patentansprüche

1. Scheibenbremse (1), vorzugsweise druckluftbetätigt, insbesondere für ein Kraftfahrzeug, mit einem eine Bremsscheibe (2) übergreifenden, als Schiebesattel ausgebildeten Bremssattel (5), der an einem ortsfesten Bremsträger (4) verschiebbar geführt angebracht ist, zwei im Bremssattel (5) angeordneten, gegensinnig bewegbaren Bremsbelägen (3, 3'), einer Zuspannvorrichtung, insbesondere mit einem Bremsdrehhebel (9), zwei Gewindestempeln (6, 6'), welche in einer Brücke (7) eingeschraubt sind, wobei die Brücke (7) mit der Zuspannvorrichtung, vorzugsweise mit dem Bremsdrehhebel (9), zusammenwirkt, einer Verschleißnachstellvorrichtung (11) mit einer Nachstelleinrichtung (10a), welche dem einen Gewindestempel (6') der Gewindestempel (6, 6') zugeordnet ist, und einer Mitnehmereinrichtung (10b), welche dem anderen Gewindestempel (6) der Gewindestempel (6, 6') zugeordnet ist, einer Überwachungseinrichtung und einer Synchroneinrichtung (16), mittels welcher die Gewindestempel (6, 6') derart gekoppelt sind, dass eine Verdrehbewegung des einen Gewindestempels (6') um eine Nachstellerachse (6'a) eine entsprechende Verdrehbewegung des anderen Gewindestempels (6) um eine Mitnehmerachse (6a) bewirkt und umgekehrt,
wobei die Überwachungseinrichtung eine Anordnung (200) zur Zustandsüberwachung der Scheibenbremse (1) mit einem modularen Aufbau von Sensoren (17, 18, 19) aufweist,
**dadurch gekennzeichnet, dass**
die Anordnung (200) zur Zustandsüberwachung der Scheibenbremse (1) einen Sattelsensor (17) zur Erfassung einer Position des Bremssattes (5) in Richtung einer Bremsscheibenachse (2a) der Bremsscheibe (2), einen Summenverschleißsensor (18) zur Erfassung eines Summenverschleißes von Bremsbelägen (3, 3') und Bremsscheibe (2) und zur Erfassung eines Hubs der Zuspannvorrichtung, insbesondere des Bremsdrehhebels (9), einen Drucksensor (19) zur Erfassung eines Drucks eines Innenraums (5c) eines Zuspannabschnitts (5a) des Bremssattels (5), ein Kupplungsglied (21) zur Kopplung des Summenverschleißsensors (18) mit der Nachstelleinrichtung (10a) und mit der Zuspannvorrichtung, und eine Schalteinheit (25), welche mit den Sensoren (17, 18, 19) kabelgebunden oder kabellos in Verbindung steht, umfasst.

2. Scheibenbremse (1) nach Anspruch 1,
**dadurch gekennzeichnet, dass**
der Summenverschleißsensor (18) mit einem Spindeltrieb (22) und einem Planetengetriebe (23) koaxial zu dem Gewindestempel (6) in der Mitnehmereinrichtung (10b) angeordnet sind.

3. Scheibenbremse (1) nach Anspruch 2,
**dadurch gekennzeichnet, dass**
der Summenverschleißsensor (18) und der Drucksensor (19) zusammen mit einem Spindeltrieb (22) und einem Planetengetriebe (23) eine Sensoreinheit (100) bilden, wobei die Sensoreinheit (100) und das Kupplungsglied (21) in der Mitnehmereinrichtung (10b) angeordnet sind.

4. Scheibenbremse (1) nach Anspruch 3,
**dadurch gekennzeichnet, dass**
der Drucksensor (19) auf einer Platine des Summenverschleißsensors (18) integriert ist.

5. Scheibenbremse (1) nach Anspruch 3 oder 4,
**dadurch gekennzeichnet, dass**
das Kupplungsglied (21) koaxial zu dem Gewindestempel (6) und hülsenartig über dem Gewindestempel (6) der Mitnehmereinrichtung (10b) angeordnet ist, wobei das Kupplungsglied (21) über einen Antriebsabschnitt (21a) an einem Ende mit dem Gewindestempel (6) drehfest gekoppelt ist, und wobei das andere Ende des Kupplungsgliedes (21) über einen Abtriebsabschnitt (21c) mit dem Spindeltrieb (22) in Verbindung steht.

6. Scheibenbremse (1) nach Anspruch 5, wobei die Synchroneinrichtung (16) Koppelräder (16a, 16'a) aufweist, die an der Brücke (7) ortsfest und drehbar angeordnet sind und von denen jeweils eins mit dem jeweiligen Gewindestempel (6, 6') drehfest gekoppelt ist,
**dadurch gekennzeichnet, dass**
der Antriebsabschnitt (21a) des Kupplungsgliedes (21) mit dem zu dem Gewindestempel (6) der Mitnehmereinrichtung (10b) zugehörigen Koppelrad (16a) der Synchroneinrichtung (16) drehfest gekoppelt ist.

7. Scheibenbremse (1) nach Anspruch 6,
**dadurch gekennzeichnet, dass**
das Kupplungsglied (21) zwei sich gegenüberstehend angeordnete Verbindungsabschnitte (21b) aufweist, welche den Antriebsabschnitt (21a) und den Abtriebsabschnitt (21c) verbinden und wobei jeder Verbindungsabschnitt (21) aus zwei dreieckförmigen Abschnitten, deren Spitzen verbunden sind, besteht, und wobei die Grundseite des einen dreieckförmigen Abschnitts mit dem Antriebsabschnitt (21a) verbunden ist und die Grundseite des anderen dreieckförmigen Abschnitts mit dem Abtriebsabschnitt (21c) verbunden ist.

8. Scheibenbremse (1) nach einem der Ansprüche 5 bis 7,
**dadurch gekennzeichnet, dass**
das Kupplungsglied (21) derart mit dem Planetengetriebe (23) gekoppelt ist, dass das Kupplungsglied (21) eine Drehbewegung der Gewindespindel (6) auf einen ersten Eingang (23a) des Planetengetriebes (23) überträgt, und dass das Kupplungsglied (21) derart mit dem Spindeltrieb (22) gekoppelt ist, dass das Kupplungsglied (21) eine lineare Hubbewegung der Brücke (7) als eine lineare Hubbewegung koaxial zu dem Gewindestempel (6) in Richtung der Bremsscheibenachse (2a) auf den Spindeltrieb (22) überträgt.

9. Scheibenbremse (1) nach Anspruch 8,
**dadurch gekennzeichnet, dass**
der Spindeltrieb (22) mit dem Planetengetriebe (23) derart gekoppelt ist, dass der Spindeltrieb (22) die lineare Hubbewegung des Kupplungsgliedes (21) in eine Drehbewegung umwandelt und diese Drehbewegung auf einen zweiten Eingang (23b) des Planetengetriebes (23) überträgt.

10. Scheibenbremse (1) nach einem der Ansprüche 3 bis 9,
**dadurch gekennzeichnet, dass**
das Kupplungsglied (21), der Spindeltrieb (22), das Planetengetriebe (23) und der Summenverschleißsensor (18) im Verlauf einer Mitnehmerachse (6a) der Mitnehmereinrichtung (10b) ausgehend von der Brücke (7) hintereinander angeordnet sind.

11. Scheibenbremse (1) nach Anspruch 10,
**dadurch gekennzeichnet, dass**
der Spindeltrieb (22), das Planetengetriebe (23), der Summenverschleißsensor (18), und der Drucksensor (19) als Sensoreinheit (100) innerhalb eines Sensorgehäuses (13) auf bzw. in einem Träger (27) angeordnet sind, wobei sich das Sensorgehäuse (13) durch eine der Mitnehmereinrichtung (10b) zugeordnete Durchgangsöffnung einer Außenwand (5d) des Zuspannabschnitts (5a) des Bremssattels (5) erstreckt und mit einem kappenartige Abschnitt von der Außenwand (5d) nach außen hervorsteht.

12. Scheibenbremse (1) nach Anspruch 11,
**dadurch gekennzeichnet, dass**
der kappenartige Abschnitt des Sensorgehäuses (13) eine seitliche Erweiterung (20) aufweist, die sowohl eine steckbare Verbindung zu einem Anschlussabschnitt (17f) des Sattelsensors (17) als auch einen gemeinsamen Anschluss (14) der Sensoren (17, 18, 19) aufweist.

13. Scheibenbremse (1) nach Anspruch 12,
**dadurch gekennzeichnet, dass**
die seitliche Erweiterung (20) des kappenartigen Abschnitts des Sensorgehäuses (13) eine Halterung für den Sattelsensor (17) bildet.

14. Scheibenbremse (1) nach Anspruch 12 oder 13,
**dadurch gekennzeichnet, dass**
der Sattelsensor (17) ein Gehäuse (17b) mit dem Anschlussabschnitt (17f), eine Stange (17c) und eine Feder (17e) umfasst, wobei ein freies Ende der Stange (17c) einen Kontaktabschnitt (17d) aufweist, wobei sich das andere Ende der Stange (17c) in das Gehäuse (17b) erstreckt, in diesem gegen eine Federkraft der Feder (17e) verschiebbar geführt und mit einem Linearsensor gekoppelt ist.

15. Scheibenbremse (1) nach Anspruch 14,
**dadurch gekennzeichnet, dass**
der Sattelsensor (17) außerhalb des Bremssattels (5) an dem Zuspannabschnitt (5a) des Bremssattels (5) so angebracht ist, dass der Kontaktabschnitt (17d) des freien Endes der Stange (17c) des Sattelsensors (17) mit einem ortsfesten Bauteil/Teil der Scheibenbremse (1) oder einem ortsfesten Teil eines Fahrzeugs, dem die Scheibenbremse (1) zugeordnet ist, oder/und mit einem Abschnitt des ortsfesten Bauteils/Teils in Kontakt steht und durch die Federkraft der Feder (17e) gegen das ortsfeste Bauteil gedrückt wird.

16. Scheibenbremse (1) nach Anspruch 15,
**dadurch gekennzeichnet, dass**
das ortsfeste Bauteil der Scheibenbremse (1) der Bremsträger (4) ist.

17. Scheibenbremse (1) nach Anspruch 16,
**dadurch gekennzeichnet, dass**
das ortsfeste Bauteil der Scheibenbremse (1) ein Trägerbeam (4b) des Bremsträgers (4) ist.

18. Scheibenbremse (1) nach Anspruch 14,
**dadurch gekennzeichnet, dass**
der Sattelsensor (17) außerhalb des Bremssattels (5) mit seinem Gehäuse (17b) an einem ortsfestem Achsteil eines Fahrzeugs, dem die Scheibenbremse (1) zugeordnet ist, bzw. an dem Bremsträger (4) so angebracht ist, dass der Kontaktabschnitt (17d) des freien Endes der Stange (17c) des Sattelsensors (17) mit dem Bremssattel (5) oder/und mit einem Abschnitt des Bremssattels (5) in Kontakt steht und durch die Federkraft der Feder (17e) gegen den Bremssattel (5) oder/und den Abschnitt des Bremssattels (5) gedrückt wird.

19. Scheibenbremse (1) nach einem der vorhergehenden Ansprüche,
**dadurch gekennzeichnet, dass**
die Anordnung (200) zur Zustandsüberwachung der Scheibenbremse (1) mindestens einen Temperatursensor innerhalb oder/und außerhalb des Bremssattels (5) aufweist.

20. Scheibenbremse (1) nach einem der vorhergehenden Ansprüche,
**dadurch gekennzeichnet, dass**
die Anordnung (200) zur Zustandsüberwachung der Scheibenbremse (1) mindestens eine für die Sensoren (17, 18, 19) gemeinsame Schnittstelle (14) aufweist.

21. Verfahren zum Zustandsüberwachen einer Scheibenbremse (1) nach einem der vorhergehenden Ansprüche,
wobei
mittels des Summenverschleißsensors (18) eine Erfassung und Überwachung eines Summenverschleißes von Reibpartnern Bremsbeläge (3, 3') und Bremsscheibe (2), eines Verschleißes der Bremsscheibe (2) nach Wechsel der Bremsbeläge (3, 3'), einer Hysterese einer Zuspannvorrichtung der Scheibenbremse (1), eines Hubs der Zuspannvorrichtung, insbesondere einer Brücke (7) oder/und eines Bremsdrehhebels (9), und eines Lüftspiels der Reibpartner Bremsbeläge (3, 3') und Bremsscheibe (2) erfolgt, und dass zudem eine Überwachung eines mechanischen Zustands der inneren Mechanik der Scheibenbremse (1) und einer Feststellbremse durchgeführt wird,
**dadurch gekennzeichnet, dass**
mittels eines Drucksensors (19) eine Überwachung von Dichtungen eines Innenraums (5c) eines Zuspannabschnitts (5a) eines Bremssattels (5) der Scheibenbremse (1), eine Überwachung von Heißläufern durch ein temperaturäquivalentes Signal des Drucksensors (19) und eine Lüftspielplausibilisierung durchgeführt wird, und dass mittels eines Sattelsensors (17) eine Erfassung und Überwachung der Position des Bremssattels (5), eines Einzelbelagverschleißes eines äußeren bzw. rücksenseitigen Bremsbelags (3') und eine Überwachung eines Zustands von Führungen und/oder Lagerungen des Bremssattels (5) durchgeführt werden.

22. Verfahren nach Anspruch 21,
**dadurch gekennzeichnet, dass**
mittels mindestens eines Temperatursensors eine Erfassung und Überwachung von Temperaturen der Scheibenbremse (1) durchgeführt werden.

23. Verfahren nach Anspruch 21 oder 22,
**dadurch gekennzeichnet, dass**
eine Datenübertragung der Signale der Sensoren (17, 18, 19) über eine gemeinsame analoge Datenleitung oder/und über eine digitale Datenverbindung erfolgt.

24. Verfahren nach Anspruch 23,
**dadurch gekennzeichnet, dass**
eine Datenübertragung der Signale der Sensoren (17, 18, 19) über eine gemeinsame analoge Datenleitung als eine analoge Datenübertragung der Signale der Sensoren (17, 18, 19) mittels Multiplexer durch ein sequentielles Einlesen der Überwachungsdaten der einzelnen Sensoren erfolgt.

25. Verfahren nach Anspruch 23,
**dadurch gekennzeichnet, dass**
eine Datenübertragung der Signale der Sensoren (17, 18, 19) über eine gemeinsame digitale Datenleitung als eine digitale Datenübertragung der Signale der Sensoren (17, 18, 19) unter Verwenden eines digitalen Bus-Protokolls erfolgt, wobei ein Master in einem externen Steuergerät (26) angeordnet ist.

## Claims

1. Disc brake (1), preferably pneumatically actuated, in particular for a motor vehicle, with a brake calliper (5) overlapping a brake disc (2) and designed as a sliding calliper, which is displaceably guided at a stationary adapter (4), with two brake pads (3, 3') located in the brake calliper (5) and movable in opposite directions, with an application device, in particular with a brake rotary lever (9), with two threaded plungers (6, 6') screwed into a bridge (7), wherein the bridge (7) interacts with the application device, preferably with the brake rotary lever (9), with a wear readjustment device (11) having a readjustment device (10a) assigned to the one threaded plunger (6') of the threaded plungers (6, 6'), and with a driver device (10b) assigned to the other threaded plunger (6) of the threaded plungers (6, 6'), with a monitoring device and a synchronising device (16), by means of which the threaded plungers (6, 6') are coupled in such a way that a twisting movement of the one threaded plunger (6') about a readjustment axis (6'a) causes a corresponding twisting movement of the other threaded plunger (6) about a driver axis (6a) and vice versa,
wherein the monitoring device has an assembly (200) for monitoring the condition of the disc brake (1) with a modular structure of sensors (17, 18, 19),
**characterised in that**
the assembly (200) for monitoring the condition of the disc brake (1) comprises a calliper sensor (17) for detecting a position of the brake calliper (5) in the direction of a brake disc axis (2a) of the brake disc (2), a total wear sensor (18) for detecting a total wear of brake pads (3, 3') and brake disc (2) and for detecting a stroke of the application device, in particular of the brake rotary lever (9), a pressure sensor (19) for detecting a pressure of an interior (5c) of an application section (5a) of the brake calliper (5), a coupling member (21) for coupling the total wear sensor (18) to the readjustment device (10a) and to the application device, and a switching unit (25) connected to the sensors (17, 18, 19) in a wired or wireless manner.

2. Disc brake (1) according to claim 1,
**characterised in that**
the total wear sensor (18) is located in the driver device (10b) with a spindle drive (22) and a planetary gear mechanism (23) coaxially with the threaded plunger (6).

3. Disc brake (1) according to claim 2,
**characterised in that**
the total wear sensor (18) and the pressure sensor (19), together with a spindle drive (22) and a planetary gear mechanism (23), form a sensor unit (100), the sensor unit (100) and the coupling member (21) being located in the driver device (10b).

4. Disc brake (1) according to claim 3,
**characterised in that**
the pressure sensor (19) is integrated on a printed circuit board of the total wear sensor (18).

5. Disc brake (1) according to claim 3 or 4,
**characterised in that**
the coupling member (21) is arranged coaxially with the threaded plunger (6) and in the manner of a sleeve over the threaded plunger (6) of the driver device (10b), wherein the coupling member (21) is non-rotatably coupled to the threaded plunger (6) at one end via a drive section (21a), and wherein the other end of the coupling member (21) is connected to the spindle drive (22) via a driven section (21c).

6. Disc brake (1) according to claim 5, wherein the synchronising device (16) has coupling wheels (16a, 16'a), which are located at the bridge (7) in a stationary and rotatable manner and of which one each is coupled to the respective threaded plunger (6, 6')
**characterised in that**
the drive section (21a) of the coupling member (21) is non-rotatably coupled to that coupling wheel (16a) of the synchronising device (16) which belongs to the threaded plunger (6) of the driver device (10b).

7. Disc brake (1) according to claim 6,
**characterised in that**
the coupling member (21) has two oppositely arranged connecting sections (21b) connecting the drive section (21a) and the driven section (21c), and wherein each connecting section (21) consists of two triangular sections the apexes of which are connected, and wherein the base side of the one triangular section is connected to the drive section (21a) and the base side of the other triangular section is connected to the driven section (21c).

8. Disc brake (1) according to any of claims 5 to 7,
**characterised in that**
the coupling member (21) is coupled to the planetary gear mechanism (23) in such a way that the coupling member (21) transmits a rotary movement of the threaded spindle (6) to a first input (23a) of the planetary gear mechanism (23), and **in that** the coupling member (21) is coupled to the spindle drive (22) in such a way that the coupling member (21) transmits a linear stroking movement of the bridge (7) to the spindle drive (22) as a linear stroking movement coaxial with the threaded plunger (6) in the direction of the brake disc axis (2a).

9. Disc brake (1) according to claim 8,
**characterised in that**
the spindle drive (22) is coupled to the planetary gear mechanism (23) in such a way that the spindle drive (22) converts the linear stroking movement of the coupling member (21) into a rotary movement and transmits said rotary movement to a second input (23b) of the planetary gear mechanism (23).

10. Disc brake (1) according to any of claims 3 to 9.
**characterised in that**
the coupling member (21), the spindle drive (22), the planetary gear mechanism (23) and the total wear sensor (18) are arranged one behind the other in the course of a driver axis (6a) of the driver device (10b), starting from the bridge (7).

11. Disc brake (1) according to claim 10,
**characterised in that**
the spindle drive (22), the planetary gear mechanism (23), the total wear sensor (18) and the pressure sensor (19) are located as a sensor unit (100) within a sensor housing (13) or on a support (27), wherein the sensor housing (13) extends through a through-opening - assigned to the driver device (10b) - of an outer wall (5d) of the application section (5a) of the brake calliper (5) and projects outwards from the outer wall (5d) with a cap-like section.

12. Disc brake (1) according to claim 11,
**characterised in that**
the cap-like section of the sensor housing (13) has a lateral extension (20) having both a pluggable connection to a connecting section (17f) of the calliper sensor (17) and a common connection (14) of the sensors (17, 18, 19).

13. Disc brake (1) according to claim 12,
**characterised in that**
the lateral extension (20) of the cap-like section of the sensor housing (13) forms a holder for the calliper sensor (17).

14. Disc brake (1) according to claim 12 or 13,
**characterised in that**
the calliper sensor (17) comprises a housing (17b) with the connecting section (17f), a rod (17c) and a spring (17e), wherein a free end of the rod (17c) has a contact section (17d), wherein the other end of the rod (17c) extends into the housing (17b), is displaceably guided therein against a spring force of the spring (17e) and coupled to a linear sensor.

15. Disc brake (1) according to claim 14,
**characterised in that**
the calliper sensor (17) is attached to the application section (5a) of the brake calliper (5) outside the brake calliper (5) in such a way that the contact section (17d) of the free end of the rod (17c) of the calliper sensor (17) is in contact with a stationary component/part of the disc brake (1) or a stationary part of a vehicle to which the disc brake (1) is assigned and/or a section of the stationary component/part and is pressed against the stationary component by the spring force of the spring (17e).

16. Disc brake (1) according to claim 15,
**characterised in that**
the stationary component of the disc brake (1) is the adapter (4).

17. Disc brake (1) according to claim 16,
**characterised in that**
the stationary component of the disc brake (1) is a support beam (4b) of the adapter (4).

18. Disc brake (1) according to claim 14,
**characterised in that**
the calliper sensor (17) is attached outside the brake calliper (5) with its housing (17b) to a stationary axle part of a vehicle to which the disc brake (1) is assigned or to the adapter (4) in such a way that the contact section (17d) of the free end of the rod (17c) of the calliper sensor (17) is in contact with the brake calliper (5) and/or with a section of the brake calliper (5) and is pressed against the brake calliper (5) and/or the section of the brake calliper (5) by the spring force of the spring (17e).

19. Disc brake (1) according to any of the preceding claims,
**characterised in that**
the assembly (200) for monitoring the condition of the disc brake (1) has at least one temperature sensor within and/or outside the brake calliper (5).

20. Disc brake (1) according to any of the preceding claims,
**characterised in that**
the assembly (200) for monitoring the condition of the disc brake (1) has at least one interface (14) common to the sensors (17, 18, 19).

21. Method for monitoring the condition of a disc brake (1) according to any of the preceding claims,
wherein
by means of the total wear sensor (18), a detection and monitoring of a total wear of friction partners brake pads (3, 3') and brake disc (2), of a wear of the brake disc (2) after a replacement of the brake pads (3, 3'), of a hysteresis of an application device of the disc brake (1), of a stroke of the application device, in particular of a bridge (7) and/or a brake rotary lever (9), and of a clearance of the friction partners brake pads (3, 3') and brake disc (2) is carried out and in that a monitoring of a mechanical condition of the internal mechanics of the disc brake (1) and of a parking brake is performed,
**characterised in that**
by means of a pressure sensor (19), a monitoring of seals of an interior (5c) of an application section (5a) of a brake calliper (5) of the disc brake (1), a monitoring of hot boxes by a temperature-equivalent signal of the pressure sensor (19) and a clearance plausibility check are performed, and **in that**, by means of a calliper sensor (17), a detection and monitoring of the position of the brake calliper (5), of an individual pad wear of an outer or rear brake pad (3') and a monitoring of a condition of guides and/or mountings of the brake calliper (5) are performed.

22. Method according to claim 21,
**characterised in that**
by means of at least one temperature sensor, a detection and monitoring of temperatures of the disc brake (1) are performed.

23. Method according to claim 21 or 22,
**characterised in that**
a data transmission of the signals of the sensors (17, 18, 19) is carried out via a common analogue data line and/or via a digital data link.

24. Method according to claim 23,
**characterised in that**
a data transmission of the signals of the sensors (17, 18, 19) is carried out via a common analogue data line as an analogue data transmission of the signals of the sensors (17, 18, 19) by means of a multiplexer by sequentially reading in the monitoring data of the individual sensors.

25. Method according to claim 23,
**characterised in that**
a data transmission of the signals of the sensors (17, 18, 19) is carried out via a common data line is carried out as a digital data transmission of the signals of the sensors (17, 18, 19) using a digital bus protocol, a master being located in an external control device (26).

## Revendications

1. Frein (1) à disque, de préférence à actionnement par l'air comprimé, notamment d'un véhicule automobile, comprenant un étrier (5) de frein, qui chevauche un disque (2) de frein, qui est constitué en étrier coulissant et qui est monté en étant guidé à coulissement sur un flasque (4) de frein fixe en emplacement, deux garnitures (3, 3') de frein, qui sont montées dans l'étrier (5) de frein et qui peuvent être déplacées en sens contraire, un système de serrage, ayant notamment un levier (9) tournant de frein, deux poinçons (6, 6') filetés, qui sont vissés dans un pontet (7), dans lequel le pontet (7) coopère avec le dispositif de serrage, de préférence par le levier (9) tournant de frein, un dispositif (11) de rattrapage d'usure ayant un dispositif (10a) de rattrapage, qui est associé à l'un des poinçons (6') filetés des poinçons (6, 6') filetés, et un dispositif (10b) à entraîneur, qui est associé à l'autre poinçon (6) fileté des poinçons (6, 6') filetés, un dispositif de contrôle et un dispositif (16) de synchronisation, au moyen duquel les poinçons (6, 6') filetés sont accouplés, de manière à ce qu'un mouvement de rotation de l'un des poinçons (6') filetés, autour d'un axe (6'a) de rattrapage, provoque un mouvement de rotation correspondant de l'autre poinçon (6) fileté autour d'un axe (6a) d'entraîneur et inversement,
dans lequel le dispositif de contrôle a un agencement (200) de contrôle d'état du frein (1) à disque ayant une structure modulaire de capteurs (17, 18, 19),
**caractérisé en ce que**
l'agencement (200) de contrôle de l'état du frein (1) à disque comprend un capteur (17) d'étrier de détection d'une position de l'étrier (5) de frein dans la direction d'un axe (2a) du disque (2) de frein, un capteur (18) d'une somme d'usure de détection d'une somme d'usure de garnitures (3, 3') de frein et du disque (2) de frein et de détection d'une course du dispositif de serrage, notamment du levier (9) tournant de frein, un capteur (19) de pression de détection d'une pression dans un espace (5c) intérieur d'une partie (5a) de serrage de l'étrier (5) de frein, un organe (21) d'accouplement pour l'accouplement du capteur (18) de somme d'usure au dispositif (10a) de rattrapage et au dispositif de serrage, et une unité (25) de commutation, qui est en liaison par câble ou sans câble avec les capteurs (17, 18, 19).

2. Frein (1) à disque suivant la revendication 1,
**caractérisé en ce que**
le capteur (18) de la somme d'usure est un entraînement (22) à broche et un engrenage (23) épicycloïdal montés coaxialement au poinçon (6) fileté dans le dispositif (10b) à entraîneur.

3. Frein (1) à disque suivant la revendication 2,
**caractérisé en ce que**
le capteur (18) de somme d'usure et le capteur (19) de pression forment, ensemble avec un entraîneur (22) à broche et un engrenage (23) épicycloïdal, une unité (100) de capteur, dans lequel l'unité (100) de capteur et l'organe (21) d'accouplement sont montés dans le dispositif (10b) à entraîneur.

4. Frein (1) à disque suivant la revendication 3,
**caractérisé en ce que**
le capteur (19) de pression est intégré à une platine du capteur (18) de la somme d'usure.

5. Frein (1) à disque suivant la revendication 3 ou 4, **caractérisé en ce que**
l'organe (21) d'accouplement est monté coaxialement au poinçon (6) fileté et à la manière d'une douille sur le poinçon (6) fileté du dispositif (10b) à entraîneur, dans lequel l'organe (21) d'accouplement est accouplé d'une manière fixe en rotation au poinçon (6) fileté à une extrémité par une partie (21a) menante, et dans lequel l'autre extrémité de l'organe (21) d'accouplement est en liaison avec l'entraînement (22) à broche par une partie (21c) menée.

6. Frein (1) à disque suivant la revendication 5, dans lequel le dispositif (16) de synchronisation a des roues (16, 16'a) d'accouplement, qui sont montées fixes en emplacement et tournantes sur le pontet (7) et dont l'une respectivement est solidaire en rotation du poinçon (6, 6') fileté respectif, **caractérisé en ce que**
la partie (21a) menante de l'organe (21) d'accouplement est solidaire en rotation de la roue (16a) d'accouplement, appartenant au poinçon (6) fileté du dispositif (10b) à entraîneur, du dispositif (16) de synchronisation.

7. Frein (1) à disque suivant la revendication 6,
**caractérisé en ce que**
l'organe (21) d'accouplement a deux parties (21b) de liaison, qui sont montées en opposition et qui relient la partie (21a) menante et la partie (21c) menée et dans lequel chaque partie (21) de liaison est constituée de deux parties triangulaires, dont les pointes sont reliées, et dans lequel le côté de base de l'une des parties triangulaires est relié à la partie (21a) menante et le côté de base de l'autre partie triangulaire est relié à la partie (21c) menée.

8. Frein (1) à disque suivant l'une des revendications 5 à 7, **caractérisé en ce que**
l'organe (21) d'accouplement est accouplé à l'engrenage (23) épicycloïdal, de manière à ce que l'organe (21) d'accouplement transmette un mouvement de rotation du poinçon (6) fileté à une première entrée (23a) de l'engrenage (23) épicycloïdal, et **en ce que** l'organe (21) d'accouplement est accouplé à l'entraînement (22) à broche de manière à ce que l'organe (21) d'accouplement transmette à l'entraînement (22) à broche un mouvement de course linéaire du pontet (7), sous la forme d'un mouvement de course linéaire, coaxialement au poinçon (6) fileté dans la direction de l'axe (2a) du disque de frein.

9. Frein (1) à disque suivant la revendication 8,
**caractérisé en ce que**
l'entraînement (22) à broche est accouplé à l'engrenage (23) épicycloïdal, de manière à ce que l'entraînement (22) à broche transforme le mouvement de course linéaire de l'organe (21) d'accouplement en un mouvement de rotation et transmette ce mouvement de rotation à une deuxième entrée (23b) de l'engrenage (23) épicycloïdal.

10. Frein (1) à disque suivant la revendication l'une des revendications 3 à 9,
**caractérisé en ce que**
l'organe (21) d'accouplement, l'entraînement (22) à broche, l'engrenage (23) épicycloïdal et le capteur (18) de la somme d'usure sont montés les uns derrière les autres, à partir du pontet (7) dans le tracé d'un axe (6a) d'entraîneur du dispositif (10b) à entraîneur.

11. Frein (1) à disque suivant la revendication 10, **caractérisé en ce que**
l'entraînement (22) à broche, l'engrenage (23) épicycloïdal, le capteur (18) de la somme d'usure et le capteur (19) de pression sont montés comme unité (100) de capteur à l'intérieur d'un boîtier (13) de capteur ou sur ou dans un support (27), dans lequel le boîtier (13) de capteur passe dans une ouverture de passage, associée au dispositif (10b) à entraîneur, d'une paroi (5d) extérieure de la partie (5a) de serrage de l'étrier (5) de frein et fait saillie vers l'extérieur de la paroi (5d) extérieure par une partie de type en coiffe.

12. Frein (1) à disque suivant la revendication 11, **caractérisé en ce que**
la partie de type en coiffe du boîtier (13) de capteur a un agrandissement (20) latéral, qui a tant une liaison pouvant être enfichée vers une partie (17f) de connexion du capteur (17) d'étrier, qu'également une borne (14) commune des capteurs (17, 18, 19).

13. Frein (1) à disque suivant la revendication 12, **caractérisé en ce que**
l'agrandissement (20) latéral de la partie en coiffe du boîtier (13) de capteur forme une fixation pour le capteur (17) d'étrier.

14. Frein (1) à disque suivant la revendication 12 ou 13, **caractérisé en ce que**
le capteur (17) d'étrier comprend un boîtier (17b) ayant la partie (17f) de connexion, une barre (17c) et un ressort (17e), dans lequel une extrémité libre de la barre (17c) a une partie (17d) de contact, dans lequel l'autre extrémité de la barre (17c) s'étend dans le boîtier (17b) et est guidée à coulissement à l'encontre d'une force du ressort (17e) et est accouplée à un capteur linéaire.

15. Frein (1) à disque suivant la revendication 14, **caractérisé en ce que**
le capteur (17) d'étrier est monté à l'extérieur de l'étrier (5) de frein sur la partie (5a) de serrage de l'étrier (5) de frein, de manière à ce que la partie (17d) de contact de l'extrémité libre de la barre (17c) du capteur (17) d'étrier soit associée à une pièce / partie fixe en emplacement du frein (1) à disque ou à une partie fixe en emplacement d'un véhicule, auquel le frein (1) à disque est associé, ou/et soit en contact avec une partie de la pièce / partie fixe en emplacement et soit repoussée par la force du ressort (17e) sur la pièce fixe en emplacement.

16. Frein (1) à disque suivant la revendication 15, **caractérisé en ce que**
la pièce fixe en emplacement du frein (1) à disque est le flasque (4) de frein.

17. Frein (1) à disque suivant la revendication 16, **caractérisé en ce que**
la pièce fixe en emplacement du frein (1) à disque est une poutre (4b) du flasque (4) de frein.

18. Frein (1) à disque suivant la revendication 14, **caractérisé en ce que**
le capteur (17) d'étrier est monté à l'extérieur de l'étrier (5) de frein, par son boîtier (17b) sur une partie d'axe fixe en emplacement d'un véhicule, auquel le frein (1) à disque est associé, ou sur le flasque (4) de frein, de manière à ce que la partie (17d) de contact de l'extrémité libre de la barre (17c) du capteur (17) d'étrier soit en contact avec l'étrier (5) de frein ou/et avec une partie de l'étrier (5) de frein et soit repoussée par la force du ressort (17e) sur l'étrier (5) de frein ou/et la partie de l'étrier (5) de frein.

19. Frein (1) à disque suivant l'une des revendications précédentes,
**caractérisé en ce que**
l'agencement (200) de contrôle de l'état du frein (1) à disque a au moins un capteur de température à l'intérieur et/ou à l'extérieur de l'étrier (5) de frein.

20. Frein (1) à disque suivant l'une des revendications précédentes,
**caractérisé en ce que**
l'agencement (200) de contrôle de l'état du frein (1) à disque a au moins une interface (14) commune aux capteurs (17, 18, 19).

21. Procédé de contrôle de l'état d'un frein (1) à disque suivant l'une des revendications précédentes,
dans lequel
au moyen du capteur (18) de la somme d'usure, on effectue une détection et un contrôle d'une usure somme de partenaires de friction, à savoir garnitures (3, 3') de frein et disque (2) de frein, d'une usure du disque (2) de frein après changement des garnitures (3, 3') de frein, d'une hystérésis d'un dispositif de serrage du frein (1) à disque, d'une course du dispositif de serrage, notamment d'un pontet (7) ou/et d'un levier (9) tournant de frein, et d'un jeu entre les partenaires de friction, à savoir garnitures (3, 3') de frein et disque (2) de frein, et en ce qu'en outre, on effectue un contrôle d'un état mécanique de la mécanique interne du frein (1) à disque et d'un frein de stationnement,
**caractérisé en ce qu'**
au moyen d'un capteur (19) de pression, on effectue un contrôle des garnitures d'étanchéité d'un espace (5c) intérieur d'une partie (5a) de serrage d'un étrier (5) de frein du frein (1) à disque, un contrôle de surchauffes par un signal équivalent à une température du capteur (19) de pression et d'une vraisemblance du jeu de garnitures et **en ce que**, au moyen d'un capteur (17) d'étrier, on effectue une détection et un contrôle de la position de l'étrier (5) de frein, d'une usure individuelle de garniture d'une garniture (3') de frein extérieure ou du côté arrière, et un contrôle d'un état de guidages et/ou de paliers de l'étrier (5) de frein.

22. Procédé suivant la revendication 21,
**caractérisé en ce qu'**
au moyen d'au moins un capteur de température, on effectue une détection et un contrôle de températures du frein (1) à disque.

23. Procédé suivant la revendication 21 ou 22,
**caractérisé en ce qu'**
une transmission de données des signaux des capteurs (17, 18, 19) s'effectue par une ligne de données analogique commune ou/et par une liaison de données numérique.

24. Procédé suivant la revendication 23,
**caractérisé en ce qu'**
une transmission de données des signaux des capteurs (17, 18, 19) s'effectue par une ligne de données analogique commune, sous la forme d'une transmission de données analogique des signaux des capteurs (17, 18, 19) au moyen d'un multiplexeur par une lecture séquentielle des données de contrôle des divers capteurs.

25. Procédé suivant la revendication 23,
**caractérisé en ce qu'**
une transmission de données des signaux des capteurs (17, 18, 19) s'effectue par une ligne de données numérique commune, sous la forme d'une transmission de données numérique des signaux des capteurs (17, 18, 19) en utilisant un protocole de bus numérique, un maître étant disposé dans un appareil (26) extérieur de commande.
